# EUROPÄISCHE PATENTSCHRIFT

(11) **EP 3 872 024 B1**
(45) Veröffentlichungstag und Bekanntmachung des Hinweises auf die Patenterteilung: **21.06.2023**
(21) Anmeldenummer: 20217878.6
(22) Anmeldetag: 19.09.2017
(51) Int. Cl.: B66C 13/54, G06F 3/01, B60K 35/00, G06F 3/038, G02B 27/01, B60K 37/06, E02F 9/20, B66C 15/06, B66C 13/40, G02B 27/00

(54) **STEUERSTAND FÜR EINEN KRAN, BAGGER UND DERGLEICHEN**
CONTROL STAND FOR A CRANE, EXCAVATOR AND THE LIKE
POSTE DE COMMANDE POUR UNE GRUE, UNE EXCAVATRICE ET ANALOGUE

(30) Priorität: 20.09.2016 DE 102016011354
(43) Veröffentlichungstag der Anmeldung: 01.09.2021
(62) Teilanmeldung aus: 17771336.9
(73) Patentinhaber: Liebherr-Werk Biberach GmbH, 88400 Biberach an der Riss (DE)
(72) Erfinder: Hofmeister, Markus, 88339 Bad Waldsee (DE); Trieloff, Günter, 88299 Leutkirch (DE); Schilling, Hermann, 88433 Assmannshardt (DE)
(74) Vertreter: Thoma, Michael

(56) Entgegenhaltungen:
- EP-A1- 1 845 056
- DE-U1- 20 109 218
- US-A1- 2010 147 640

## Beschreibung

Die vorliegende Erfindung betrifft einen Steuerstand zum Steuern eines Krans, eines Baggers, einer Raupe oder einer ähnlichen Baumaschine, mit einem Sitz, mehreren vom Sitz aus betätigbaren Steuerelementen zum Eingeben von Steuerbefehlen, zumindest einer Anzeigevorrichtung zum Anzeigen von Informationen sowie einer Steuereinheit zum Erzeugen von Stellsignalen in Abhängigkeit eingegebener Steuerbefehle und/oder Bereitstellen von Informationen an die Anzeigevorrichtung. Die Erfindung betrifft ferner einen Kran mit einem solchen Steuerstand, der insbesondere in Form einer Kranführerkabine ausgebildet sein kann.

Ein solcher Steuerstand für einen Kran ist beispielsweise aus der Schrift DE 2 01 09 218 U1 bekannt, wobei dort der Führersitz zusammen mit dem Amaturenträger um eine liegende Achse nach hinten verkippt werden kann, um beim Arbeiten an hohen Objekten ein besseres Sichtfeld zu haben. Ähnliche Steuerstände mit neigbaren Sitzen sind auch aus den Schriften EP 18 45 056 A1 und US 2010/0147640 A1 bekannt. Die US 2010/0147640 A1 offenbart einen Steuerstand gemäß dem Oberbegriff des unabhängigen Anspruchs 1.

Krane wie bspw. Turmdrehkrane umfassen als Steuerstand eine Kranführerkabine, die bestimmte Kranbewegungen mitmachen und bspw. am Turm des Krans angebracht sein kann. Üblicherweise umfassen solche Kranführerkabinen einen Sitz, von dem aus der Kranführer diverse Steuerelemente wie bspw. Joysticks, Steuertasten, Regler, Schieber und dergleichen betätigen kann, um Steuerbefehle für den Kran eingeben zu können. Die genannten Steuerelemente sind dabei um den Sitz herum verteilt angeordnet, bspw. an Armlehnen oder Haltern vor dem Sitz, sodass der Maschinenführer sie bequem erreichen kann. Zudem sind im Blickfeld vor dem Sitz üblicherweise Displays angeordnet, um dem Kranführer relevante Informationen anzeigen zu können, bspw. Serviceinformationen, Betriebsanleitungen oder Kamerabilder von Kameras, die am Kran oder in der Kranumgebung positioniert sind. Üblicherweise sind hierbei für verschiedene Informationsfunktionen verschiedene Displays vorgesehen, bspw. ein Display für die Krandaten, ein Kameradisplay und ein weiteres Display für die Bedienung der Arbeitsbereichs- und Interferenzkontrolle.

Solche Kranführerkabinen können mit verschiedenen Hilfsaggregaten ausgestattet sein, die nicht unmittelbar die Kernfunktionen der Maschine bzw. des Krans steuern, sondern den Komfort des Maschinenführers erhöhen und den Betrieb sicherer machen. Solche Hilfsaggregate können bspw. eine Klimaanlage zur Regelung des Klimas in der Kranführerkabine, ein Audiosystem mit Mikrofon und Lautsprecher zur Kommunikation mit Personen in der Kranumgebung oder anderen für die Baustelle relevanten Personen, eine Beleuchtungsvorrichtung zum Beleuchten der Kranführerkabine und/oder der Kranumgebung, oder einen Scheibenwischer zum Wischen der Kranführerscheiben umfassen. Zur Steuerung dieser zusätzlichen Hilfsaggregate sind üblicherweise entsprechende Steuerelemente vorgesehen, die zu den Steuerelemente, die die eigentlichen Kran- bzw. Maschinenkernfunktionen steuern hinzukommen, sodass sich bei der entsprechenden Anzahl von Steuerelementen das Problem stellt, diese alle kompakt im Griffbereich des Maschinenführers anzuordnen.

Diesbezüglich kommt erschwerend hinzu, dass nicht alle Maschinenführer gleich groß sind, bzw. gleich lange Arme haben und es unter Kranführern sowohl Rechtshänder als auch Linkshänder gibt. Zudem entwickeln verschiedene Kranführer auch unterschiedliche Vorlieben und intuitive Automatismen, die durch jahrelanges Bedienen eines bestimmten Krantyps entstehen. Diesen verschiedenen Anforderungen gleichermaßen gerecht zu werden, um für jeden Maschinenführer eine einfache, komfortable und intuitive und damit sichere Bedienung des Krans zu ermöglichen ist schwierig und bislang nur unbefriedigend gelöst.

Der vorliegenden Erfindung liegt daher die Aufgabe zugrunde, einen verbesserten Steuerstand der genannten Art sowie einen verbesserten, damit ausgerüsteten Kran zu schaffen, die Nachteile des Standes der Technik vermeiden und letzteren in vorteilhafter Weise weiterbilden. Insbesondere soll eine komfortablere, intuitive und damit sichere Bedienbarkeit des Steuerstands erreicht werden, die den Verschiedenheiten einzelner Maschinenführer Rechnung trägt und gleichermaßen übersichtlich bleibt.

Erfindungsgemäß wird die genannte Aufgabe durch einen Steuerstand gemäß Anspruch 1 sowie einen Kran gemäß Anspruch 25 gelöst. Bevorzugte Ausgestaltungen der Erfindung sind Gegenstand der abhängigen Ansprüche.

Es wird also nach einem ersten Aspekt der Erfindung vorgeschlagen, die Steuerelemente und/oder die Anzeigevorrichtung der Steuerstands und/oder weitere Hilfsaggregate individuell konfigurierbar auszubilden, persönliche Voreinstellungen abzuspeichern und wieder aufzurufen, wenn der Steuerstand bzw. der Kran von einem bestimmten Maschinenführer gesteuert werden soll. Erfindungsgemäß sind eine Einstellvorrichtung zum Einstellen und Speichern von individuellen Voreinstellungen von Betriebsparametern und/oder -funktionen der Steuerelemente und/oder der Anzeigevorrichtung und/oder weiterer Hilfsaggregate und eine Identifiziereinrichtung zum Identifizieren eines jeweiligen Maschinenführers anhand eines erfassbaren Identifikationsmerkmals vorgesehen, wobei die Steuereinheit dazu ausgebildet ist, die gespeicherten Voreinstellungen anhand eines jeweils erfassten Identifikationsmerkmals automatisch vorzusehen. Hierdurch kann der Steuerstand anhand individueller Vorlieben und/oder ergonomischer oder körperlicher Gegebenheiten eines jeweiligen Maschinenführers vorkonfiguriert werden, sodass ein intuitiver und hierdurch sicherer Kranbetrieb erzielt werden und bei einem Kranführerwechsel Zeit gespart werden kann.

In Weiterbildung der Erfindung können die Steuerelemente und/oder die Anzeigevorrichtung und/oder die weiteren Hilfsaggregate verschiedene voreinstellbare Betriebsparameter und/oder - funtkionen aufweisen. Beispielsweise können die Steuerelemente einen mechanisch beweglichen Steuerhebel umfassen, der hinsichtlich seines Bewegungswiderstandes und/oder seiner Rückstellkraft und/oder -geschwindigkeit und/oder seiner Hebellänge einstellbar ausgebildet ist. Über die genannte Einstellvorrichtung kann der von einem Maschinenführer präferierte Bewegungswiderstand und/oder die Rückstellcharakteristik und/oder die Hebellänge eingestellt und abgespeichert werden, wobei die gespeicherten Charakteristika zusammen mit einem Identifizierungsmerkmal des Maschinenführers abgespeichert werden, um dann, wenn der Maschinenführer anhand dieses Identifizierungsmerkmals wieder identifiziert wird, die Voreinstellung automatisch aufzurufen und auszuführen.

Ein jeweiliger Maschinenführer kann hierbei anhand verschiedener Identifizierungsmerkmale identifiziert werden. Beispielsweise können über eine biometrische Erfassungseinrichtung eines oder mehrere biometrische Merkmale wie bspw. ein Fingerabdruck, ein Irismuster, ein Stimmenfrequenzmuster und/oder ergonomische Gesichtscharakteristika erfasst und abgespeichert werden, die dann bei einem neuerlichen Starten des Krans wieder erfasst und mit gespeicherten Daten abgeglichen werden.

Alternativ oder zusätzlich zu einer solchen biometrischen Erkennung kann eine Identifizierung aber auch anhand eines elektronischen Codes, der einem Maschinenführer zugeordnet ist, in Form eines Zahlencodes, der von der Anzeigevorrichtung abgefragt wird und/oder bei oder vor Inbetriebnahme des Krans über Eingabemittel am Steuerstand oder im Vorfeld einzugeben ist, bspw. über ein Tastenfeld, das in einem Touchscreen angezeigt werden kann. Alternativ oder zusätzlich kann der Kranführer auch mit einem Datenkommunikationsmittel bspw. in Form eines Transponders oder einer Magnetstreifenkarte oder einem persönlich codierten Schlüssel ausgestattet werden, der von einer Erfassungseinrichtung am Steuerstand einlesbar ist.

Alternativ oder zusätzlich kann eine Vorkonfiguration des Steuerstands auch von einem externen, vom Kran bzw. der Maschine separaten Steuergerät her erfolgen, das mit dem Kran bzw. der Baumaschine Daten kommunizieren kann. Beispielsweise kann über eine zentrale Onlineverwaltung ein Vorgesetzter des Maschinenführers eine Arbeitsplanung und Auftragsliste dem bestimmten Maschinenführer an die Steuervorrichtung übermitteln, bspw. indem der den Maschinenführer identifizierende Identifikationscode gesendet wird, sodass der Steuerstand bereits im Vorfeld individuell konfiguriert werden kann.

Alternativ oder zusätzlich zu der zuvor genannten Voreinstellung der Steuerelemente können diese auch variabel funktionalisierbar ausgebildet und mit verschiedenen Steuerfunktionen belegbar sein, bspw. dergestalt dass ein rechter Joystick wahlweise mit dem Heben und Senken des Hubwerks sowie dem Verdrehen des Krans und ein linker Joystick mit dem Verfahren der Laufkatze belegt werden können oder die genannten Belegungen auch umgekehrt vorgesehen werden können.

Alternativ oder zusätzlich zu einer solchen Vorkonfiguration der Steuerelemente kann auch die Anzeigevorrichtung in verschiedener Weise voreinstellbar ausgebildet sein. Beispielsweise können verschiedene Anzeigefelder auf verschiedene Bereiche eines Displays bzw. einer Anzeigeoberfläche verschoben werden, was dann personalisiert abgespeichert werden und in entsprechender Weise wieder aufgerufen werden kann. Alternativ oder zusätzlich können auch verschiedene Anzeigeoberflächen konfiguriert werden, auf denen verschiedene Anzeigefelder unterschiedlich bzw. individuell zusammengefaßt werden können, bspw. dergestallt, das jeder Benutzer seine präferierten oder am häufigsten benutzten Anzeigefelder auf eine bestimmte Anzeigeoberfläche legen kann, die bspw. als Präferenzoberfläche aufrufbar ist.

Umfasst die Anzeigevorrichtung zumindest einen Touchscreen, kann vorteilhafterweise vorgesehen sein, dass dort angezeigte Steuerkeys oder-touchfelder bzw. Eingabefelder in ihrer Position verschoben und/oder in ihrer Ansprechempfindlichkeit variabel einstellbar und/oder in der zuvor genannten Weise mit verschiedenen Steuerungsfunktionen belegbar sind, was wiederum personalisiert abgespeichert und wieder aufgerufen werden kann.

Vorteilhafterweise kann ein solches Touchscreen mit einem Biometriesensor versehen und/oder gekoppelt werden, sodass bei Berühren des Touchscreens ein dabei erfassbares Fingerabdruckmuster zum automatischen Aufrufen und Ausführen der dazu gespeicherten Voreinstellung verwendet werden kann. Bspw. kann ein für den Zeigefinger festgelegtes Eingabe- bzw. Touchfeld dorthin verschoben bzw. dort vorgesehen werden, wo der Zeigefinger aufgelegt und ein Fingerabdruckmuster des aufgelegten Fingers ermittelt wird.

Die Anzeigevorrichtung kann grundsätzlich an verschiedenen Stellen positionierte Touchscreens umfassen. Gemäß einem weiteren Aspekt der vorliegenden Erfindung kann ein solches Touchscreen auf der Oberfläche zumindest eines Steuerhebels vorgesehen sein, der bewegbar gelagert ist und/oder bei starrer Lagerung mit einer geeigneten Erfassungseinrichtung versehen ist, um Bewegungsdruck und/oder -zug und/oder -moment zu erfassen. Durch das Anbringen eines Touchscreens auf der Oberfläche eines solchen Steuerhebels kann dessen Funktion erweitert werden. Einerseits können über das Touchscreen auf der Oberfläche des Steuerhebels Steuerbefehle generiert werden, bspw. durch Wischbewegungen und/oder Druckbewegungen auf Steuerfelder. Alternativ oder zusätzlich kann ein solches Touchscreen zur Anzeige von Informationen auf dem Steuerhebel genutzt werden, um den Maschinenführer die Funktionalität des Steuerhebels zu verdeutlichen. Alternativ oder zusätzlich kann über ein solches Touchscreen am Steuerhebel auch eine biometrische Erfassung erfolgen. Das genannte Touchscreen kann vorteilhafterweise dreidimensional ausgebildet und/oder in die gekrümmte Kontur der Steuerhebels integriert sein.

Alternativ oder zusätzlich zu einem solchen Touchscreen an der Oberfläche eines Steuerhebels kann die Anzeigevorrichtung auch ein vorzugsweise ebenfalls dreidimensionales Touchscreen um eine Armlehne am Sitz des Steuerstandes herum aufweisen, wobei sich ein solches Touchscreen bspw. auf beiden Seiten und/oder in Form eines mehrschenkligen, insbesondere U-förmigen Touchscreenkorpus auf mehreren Seiten der Armlehne erstrecken kann.

Alternativ oder zusätzlich kann ein Touchscreen auch in die Oberfläche der Armlehne selbst integriert sein und/oder die Oberfläche der Armlehne bilden.

Alternativ oder zusätzlich kann auch zumindest ein großflächiges Touchscreen an einer Kabinenwandung und/oder -verglasung des Steuerstands angebracht sein und/oder diese Kabinenwandung und/oder -verglasung zumindest teilweise bilden, wobei mit dem vorbenannten Begriff Verglasung natürlich auch Kunststoffwerkstoffe gemeint sein können. Alternativ oder zusätzlich kann auch zumindest eine Anzeige- und/oder Berührungssteueroberfläche an einer Kabinenwandung und/oder -verglasung angezeigt bzw. darauf projeziert werden, bspw. durch ein Head-Up-Display, das vorzugsweise großflächig eine Anzeige- und/oder Steueroberfläche an zumindest einem signifikanten Teil der Kabinenwandung und/oder -verglasung anzeigen kann.

Alternativ oder zusätzlich zu den genannten Touchscreens, über die Steuerbefehle eingebbar sind, können die Steuerelemente auch zumindest eine Gesten-Erfassungseinrichtung aufweisen, mittels derer kleine oder große Körperbewegungen des Maschinenführers erfassbar und in Steuerbefehle umsetzbar sind. Beispielsweise können als kleine Gesten Fingerbewegungen wie Wischbewegungen eines Fingers erfasst werden. Als größere Körperbewegungen können bspw. Hand- oder Armbewegungen oder Kopfbewegungen wie Kopfschütteln oder auch Fußbewegungen erfasst werden. Mittels einer solchen Gestenerfassungseinrichtung können gewünschte Betätigungen von Steuerelementen, die auf der projezierten oder in anderer Wesie angezeigten Anzeige- und/oder Steueroberfläche, bspw. an der Kabinenwandung und/oder -verglasung, dargestellt sind, erfaßt und in Steuerbefehle umgesetzt werden.

Nach einem weiteren Aspekt der vorliegenden Erfindung können die Positionen der Anzeigeelemente und/oder der Softkeys auf der Anzeigefläche der Anzeigevorrichtung und/oder dessen Touchscreens auch dynamisch verändert werden, und zwar in Abhängigkeit von Bewegungen und/oder Positionen und/oder der Blickrichtung des Maschinenführers. Hierzu können am Steuerstand geeignete Erfassungsmittel vorgesehen sein, die die Bewegungen und/oder Positionen bspw. der Hände des Maschinenführers und/oder dessen Blickrichtung und/oder Kopfhaltung erfassen, um in Abhängigkeit dieser erfassten Parameter die Anzeigefelder und/oder Softkeys bspw. mit der Hand und/oder der Blickrichtung mitwandern zu lassen und/oder zu verschieben.

Alternativ oder zusätzlich können die Positionen der Anzeigeelemente und/oder der Softkeys auf der Anzeigefläche der Anzeigevorrichtung und/oder dessen Touchscreens auch in Abhängigkeit von Bewegungen und/oder Positionen des Lastaufnehmemittels oder eines anderen relevanten Maschinenelements der vom Steuerstand zu steuernden Maschine dynamisch verschoben werden. Eine solche Positionssteuerung der Anzeige- und/oder Steuerelemente geht von der Überlegung aus, dass die Blickachse des Maschinenführers in vielen Fällen bzw. oft im wesentlichen dem Lastaufnahmemittel folgt.

Gemäß einem weiteren Aspekt kann auch der Sitz des Steuerstands und/oder dessen Ausrichtung individuell an den jeweiligen Maschinenführer angepasst werden, wobei vorteilhafterweise jeweils präferierte Einstellungen als personalisierte Voreinstellungen abgespeichert und wieder aufgerufen werden können. Hiervon unabhängig kann eine automatische Anpassung des Sitzes an die Körperstatur des Bedieners vorgesehen sein, wobei Erfassungsmittel zum Erfassen der Körperstatur bspw. Drucksensoren in der Sitzfläche und/oder eine optische Sensorik zum Erfassen der Größe und/oder des Körpervolumens des Maschinenführers umfassen können. Eine Sitzsteuervorrichtung kann verschiedene Sitzparameter wie Sitzflächenhärte, Sitzflächenhöhe, Breiteneinstellung von Seitenwangen und/oder Feder- oder Dämpfungshärte automatisch oder halb-automatisch in Abhängigkeit der erfaßten Körperstatur-Merkmale bzw. der entsprechenden Sensoriksignale anpassen.

Erfindungsgemäß wird die Ausrichtung des Sitzes auch dynamisch im Betrieb veränderbar und automatisch gesteuert, insbesondere in Abhängigkeit einer jeweils erfassten Blickrichtung des Kranführers und/oder in Abhängigkeit einer Lastposition, was durch geeignete Erfassungsmittel erfasst und von einer Sitzsteuervorrichtung in eine entsprechende Bewegung des Sitzes umgesetzt werden kann, bspw. ein Nach-Vorne-Kippen des Sitzes, wenn der Lasthaken eng am Turm bodennah geführt wird.

Alternativ oder zusätzlich kann auch eine automatische Spannung und/oder Positionierung von Gurten und/oder Haltebügeln vorgesehen sein, was vorteilhafterweise automatisch in Abhängigkeit einer Verkippung des Sitzes erfolgen kann. Insbesondere kann ein Haltegurt oder -bügel gestrafft werden, wenn der Sitz nach vorne verkippt und/oder wieder gelockert werden, wenn der Sitz wieder zurückgekippt wird.

Ferner kann der Steuerstand eine Mehrzonen-Klimaanlage zum zonenweise unterschiedlichen Regeln der Lufttemperatur und/oder -güte und/oder -feuchtigkeit aufweisen, wobei eine Klima-, Steuer- und/oder Regeleinrichtung Einstellmittel zum Einstellen individueller Sollwerte für die verschiedenen Klimazonen besitzt.

Dabei können die Anzeigevorrichtung eine Anzeigeoberfläche zum Anzeigen der Klimazonen besitzen und die Einstellmittel eine Gesten- und/oder Berührungs-Erfassungssensorik zum Erfassen von Gesten und/oder Berührungen an der Anzeigeoberfläche aufweisen.

Vorteilhafterweise ist die Mehrzonen-Klimaanlage hinsichtlich der Größe und/oder Position und/oder Kontur der Klimazonen relativ zum Sitz variabel einstellbar ausgebildet.

Alternativ oder zusätzlich kann sich der Steuerstand dadurch auszeichnen, dass eine Kommunikationsvorrichtung zum Kommunizieren von Sprach- und/oder Textmeldungen vorgesehen und an die Anzeigevorrichtung angebunden ist, die eine Kommunikations-Anzeigeoberfläche zum Anzeigen von Kommunikationsinformationen aufweist.

Dabei kann die Kommunikations-Anzeigeoberfläche eine Darstellung des Arbeitsbereichs und darin befindlicher, möglicher Kommunikationspartner aufweisen, wobei Markierungsmittel zum Hervorheben eines Kommunikationspartners, zu dem eine Kommunikationsverbindung aufgebaut ist oder wird, in der Kommunikations-Anzeigeoberfläche, und/oder Auswahlmittel zum Auswählen eines in der ArbeitsbereichsDarstellung angezeigten Kommunikationspartners vorgesehen sind und die Kommunikationsvorrichtung in Abhängigkeit einer in der Arbeitsbereichsdarstellung vorgenommenen Auswahl eine Kommunikationsverbindung zu dem ausgewählten Kommunikationspartner aufbaut.

Vorzugsweise umfasst der Steuerstand eine Kollisionsprüfvorrichtung, die anhand eines aktuellen oder geplanten Verfahrwegs eine mögliche Kollision zu einem im Arbeitsbereich befindlichen Kommunikationspartner prüft, wobei die Kommunikationsvorrichtung dazu ausgebildet ist, eine Kommunikationsverbindung zu dem Kommunikationspartner automatisch aufzubauen, sobald die Kollisionsprüfvorrichtung eine mögliche Kollision zu dem genannten Kommunikationspartner bestimmt.

Ferner kann die Kommunikationsvorrichtung eine Notruftaste zum Aufbauen einer Notrufverbindung aufweisen, wobei die Kommunikationsvorrichtung dazu ausgebildet ist, bei Aufbau einer Notrufverbindung ergänzende Betriebsdaten umfassend Sensordaten und/oder Kamerabilder zu übertragen.

Ferner kann eine Wettererfassungsvorrichtung zum Erfassen von Wetterdaten und/oder Wettervorhersagedaten vorgesehen sein, wobei die Kommunikationsvorrichtung vorteilhafterweise dazu ausgebildet ist, in Abhängigkeit der erfassten Wetter- und/oder Wettervorhersagedaten automatisch eine Wetternotrufverbindung aufzubauen.

Nach einem weiteren Aspekt ist dem Steuerstand eine Gegenschallvorrichtung zum Kompensieren von Umgebungsschall und/oder Reduzieren von auf den Maschinenführer am Sitz einwirkenden Schallbelastungen zugeordnet, wobei die genannte Gegenschallvorrichtung zumindest einen Schallerfassungssensor, insbesondere ein Mikrofon, und zumindest einen Schallerzeuger zum Erzeugen von Gegenschall umfasst, wobei eine Gegenschall-Steuervorrichtung den Schallerzeuger in Abhängigkeit eines Signals des zumindest eines Schallerfassungssensors vorgesehen ist.

Der zumindest eine Schallerzeuger kann zumindest einen Vibrator umfassen, der an einer Kabinenwandung und/oder Kabinenverglasung angebracht und dazu vorgesehen ist, eine Kabinenwandung und/oder Kabinenverglasung zum Vibrieren zu bringen.

Vorzugsweise sind mehrere Schallerfassungssensoren vorgesehen, von denen zumindest ein Schallerfassungssensor außerhalb einer Führerkabine vorgesehen ist, zumindest ein Schallerfassungssensor innerhalb der Führerkabine vorgesehen ist und/oder innerhalb einer doppelten Kabinenwandung vorgesehen ist. Alternativ oder zusätzlich sind mehrere Gegenschallerzeuger vorgesehen, von denen zumindest ein Gegenschallerzeuger außerhalb der Führerkabine angeordnet ist und zumindest ein Gegenschallerzeuger innerhalb der Führerkabine und/oder innerhalb einer doppelten Kabinenwandung angeordnet ist.

Ferner kann der Steuerstand eine Scheibenwischervorrichtung mit zumindest einem Scheibenwischer zum Wischen einer Führerkabinenverglasung besitzen, wobei ein Wischbereich des Scheibenwischers in Abhängigkeit zumindest eines Betriebsparameters des Steuerstands und/oder des vom Steuerstands zu steuernden Maschine variabel einstellbar ist.

Vorteilhafterweise kann eine Erfassungseinrichtung zum Erfassen eine Wischwiderstands und/oder eines Wischhindernisses vorgesehen sein, wobei der Wischbereich des Scheibenwischers in Abhängigkeit des erfassten Wischwiderstands und/oder des Wischhindernisses auf einen Wischbereich begrenzt wird, in dem der erfasste Wischeiderstand unter einem vorbestimmten Grenzwert bleibt und/oder der außerhalb des Wischhindernisses liegt.

Alternativ odeer zusätzlich kann eine Abhebevorrichtung zum Abheben des Scheibenwischers von der zu wischenden Scheibenverglasung vorgesehen und in Abhängigkeit eines Signals der Erfassungsvorrichtung derart ansteuerbar sein, dass der Scheibenwischer über ein erfasstes Wischhindernis und/oder einen Wischbereich, in dem der erfasste Wischwiderstand einen vorbestimmten Grenzwert überschreitet, hinweggehoben wird.

Nach einem weiteren Aspekt ist eine Erfassungseinrichtung zum Erfassen der Kopfstellung und/oder der Blickrichtung eines Maschinenführers und/oder zum Erfassen einer Lastaufnahmemittel- und/oder Lastposition vorgesehen, wobei der Wischbereich des Scheibenwischers in Abhängigkeit der erfassten Blickrichtung und/oder Kopfstellung des Maschinenführers und/oder in Abhängigkeit der erfassten Lastaufnahmemittel- und/oder Lastposition automatisch eingestellt werden kann derart, dass der Wischbereich des Scheibenwischers mit dem Blickfeld des Maschinführers mitwandert.

Zur Steuerung bzw. Einstellung des Wischfelds kann der Scheibenwischer auch einen längenveränderbaren Wischerarm mit einem zugeordneten Längeneinstellaktor aufweisen und/oder ein Wischerantrieb einen einstellbaren Bewegungsbereich aufweisen.

Nach einem weiteren Aspekt kann der Steuerstand eine Beleuchtungsvorrichtung zum Beleuchten des Steuerstands besitzen, die mehrere Leuchten zum Beleuchten verschiedener Beleuchtungszonen umfassen kann, die hinsichtlich ihrer Lichtfarbe und/oder hinsichtlich ihrer Lichtstärke undabhängig voneinander variabel einstellbar sind, um in verschiedenen Beleuchtungszonen verschiedene Lichtfarben und/oder Lichtstärken zu erzeugen.

Vorzugsweise sind ferner eine Kollisionprüfvorrichtung zum Prüfen von möglichen Kollisionen und eine Lichtsteuervorrichtung zum Verändern der Lichtfarbe und/oder Lichtstärke in einer einer möglichen Kollision zugewandten Beleuchtungszone in Abhängigkeit eines Signals der Kollisionsprüfvorrichtung vorgesehen.

Alternativ oder zusätzlich ist zumindest ein Helligkeitssensor zum Erfassen der Helligkeit am Steuerstand vorgesehen, wobei in Abhängigkeit eines Helligkeitssignals des Helligkeitssensors eine variable Einstellung der Lichtfarbe und/oder Lichtstärke erfolgt.

Ferner umfaßt der Kran bzw. die von dem Steuerstand gesteuerte Maschine eine Beleuchtungsvorrichtung zum Beleuchten des Arbeitsbereichs der von dem Steuerstand zu steuernden Maschine, wobei vorzugsweise mehrere Leuchten zum Beleuchten verschiedener Beleuchtungszonen vorgesehen sind, wobei die Leuchten hinsichtlich ihrer Lichtfarbe und/oder Lichtstärke individuell steuerbar ausgebildet sind, um in verschiedenen Beleuchtungszonen unterschiedliche Lichtfarben und/oder Lichtstärken zu erzeugen.

Zumindest eine der Leuchten kann auch in ihrer Ausrichtung veränderbar sein, wobei eine Steuervorrichtung zum Steuern der Ausrichtung dieser zumindest einen Leuchte in Abhängigkeit einer Lastaufnahmemittel- und/oder Lastposition derart, dass der von der Leuchte erzeugte Beleuchtungsbereich automatisch mit dem Lastaufnahmemittel und/oder der Last mitwandert, vorgesehen sein kann.

Ferner kann zumindest eine Leuchte hinsichtlich der Position und/oder Größe und/oder Kontur der von ihr beleuchteten Beleuchtungszone variabel ausgebildet und von einer Steuervorrichtung in Abhängigkeit eines aktuellen oder geplanten Verfahrwegs des Lastaufnahmemittels automatisch ansteuerbar sein derart, dass die von der Leuchte erzeugte Beleuchtungszone den Verfahrweg des Lastaufnahmemittels kennzeichnet und/oder ausleuchtet.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung eines Steuerhebels des Steuerstands eines Kranes, wobei in den Teilansichten (a) bis (h) verschiedene Ausführungsoptionen einer Rückstellvorrichtung zum Rückstellen des Steuerhebels und einer Sensorik zum Erfassen von Steuerhebelbewegungen und/oder -betätigungskräften und -momenten dargestellt sind und in der Teilansicht (i) eine Verstellvorrichtung zum Verstellen der Hebellänge dargestellt ist,
- Fig. 2:: eine schematische Darstellung des Griffbereichs eines Steuerhebels des Steuerstands und der auf dessen Oberfläche angebrachten Steuerelemente, die personalisiert konfigurierbar ausgebildet sind,
- Fig. 3:: eine schematische Darstellung des Griffbereichs eines Steuerhebels des Steuerstands, an dess Oberfläche ein dreidimensionales Touchdisplay mit Sensorfläche vorgesehen ist,
- Fig. 4:: eine schematische Darstellung eines um die Armlehne des Sitzes des Steuerstandes herum angebrachtes dreidimensionales Touchscreen, das hinsichtlich seiner Anzeigeelemente und Steuerelemente sowie deren Funktion und Position individuell konfigurierbar ist,
- Fig. 5:: eine schematische Darstellung eines Touchscreens, das die Oberflächen der Armlehne des Sitzes des Steuerstandes bildet,
- Fig. 6:: eine schematische Darstellung einer großflächigen Visualisierungs- und Bedienoberfläche, die auf der Kabinenwandung und/oder -verglasung des Steuerstands realisiert ist,
- Fig. 7:: eine schematische Darstellung des Sitzes des Steuerstandes, die dessen Unterteilungen in verschiedene Zonen und deren Verstellbarkeiten zeigt,
- Fig. 8:: eine schematische Darstellung des Sitzes aus Fig. 7 in einer Seitenansicht, wobei dessen Verkippbarkeit und die zugehörige Verstellung eines Haltebügels oder Sicherheitsgurts gezeigt ist,
- Fig. 9:: eine schematische Darstellung von Steuerungsoberflächen für die individuelle Einstellung einer Klimaanlage und deren Klimazonen,
- Fig. 10:: eine schematische Darstellung des Kommunikationssystems des Steuerstands zum Kommunizieren mit dritten Personen und deren Visualisierung auf der Anzeigevorrichtung des Steuerstands,
- Fig. 11:: eine schematische Darstellung eines Gegenschallsystems des Steuerstands zum Reduzieren von Umgebungsgeräuschen, wobei ein Umgebungsgeräusche umfassendes Mikrofon und ein den Gegenschall erzeugender Lautsprecher dargestellt sind,
- Fig 12.: eine schematische Darstellung der Anordnung der Komponenten des Gegenschallsystems aus Fig. 11 an verschiedenen Stellen des Steuerstands und dessen Kabinenwandungen,

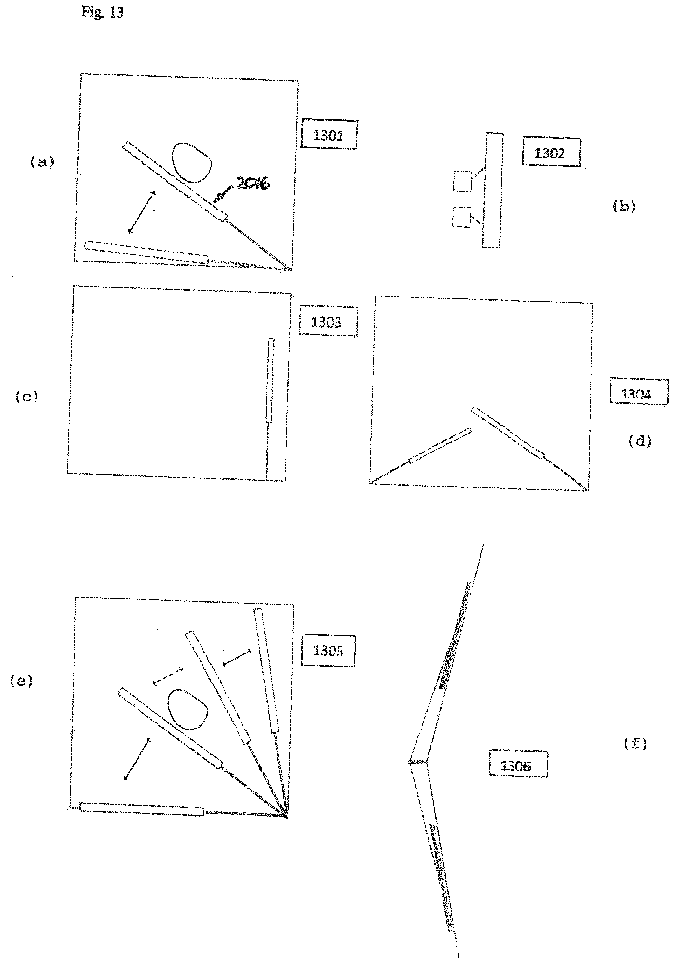

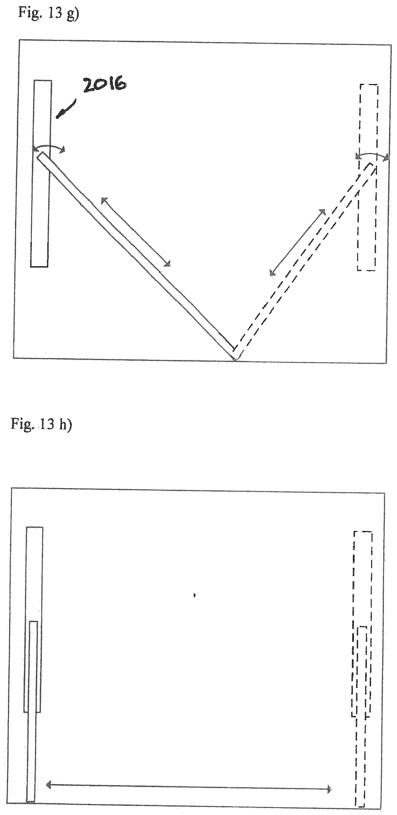

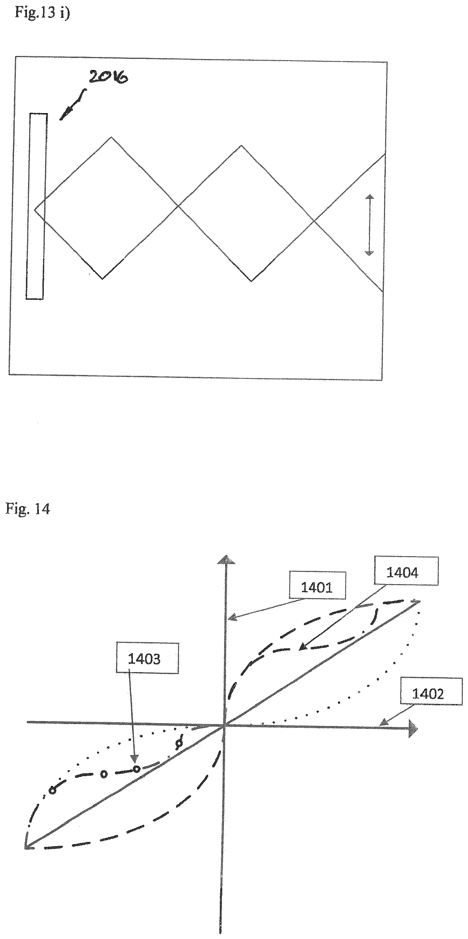

- Fig. 13:: eine schematische Darstellung eines Scheibenreinigungssystems des Steuerstands aus den vorhergehenden Figuren, wobei in verschiedenen Teilansichten eine Kollisionsschaltung des Scheibenwischers, abwechselnd verschiedene Ruhepositionen des Scheibenwischers, eine Serviceposition des Scheibenwischers, das Zusammenspiel mehrerer Scheibenwischer, ein automatisches Abheben des Scheibenwischers bei Kollisionen, die Anordnung eines gemeinsamen Antriebs für zwei Scheibenwischer auf unterschiedlich geneigten Scheibenbereichen, die Längenveränderbarkeit eines Scheibenwischerarms, eine horizontale Verfahrbarkeit des Scheibenwischers und eine vertikale Verfahrbarkeit dargestellt sind,
- Fig. 14:: eine schematische Darstellung der Kennlinie eines Sollwert-Verlaufs des Steuerhebels und deren Eingabemöglichkeiten zum Anpassen der Kennlinie an einen Maschinenführer,
- Fig. 15:: eine schematische Darstellung eines Kamerasystems des Krans und der aus dem Kamerabild herausgefilterten Objekte und deren Darstellung an einem Display des Steuerstands,
- Fig. 16:: eine schematische Darstellung der Beleuchtungsvorrichtung des Krans und deren Einstellbarkeit zum Ausleuchten eines gewünschten Kranumfelds, und
- Fig. 17:: eine schematische Darstellung einer Anzeigevorichtung, deren Position relativ zum Sitz des Steuerstands dynamisch während des Betriebs der zu steuernden Maschine verstellt wird.

Der nachfolgend anhand der Figuren näher erläuterte Steuerstand sieht verschiedene Neuerungen vor und kann insbesondere in Form einer Kranführerkabine an einem Kran vorgesehen, bspw. am Turm oder dessen Drehspitze eines Turmdrehkrans angebracht sein. Ggf. kann der Steuerstand aber auch als vom Kran separater Fernsteuerstand oder als Steuerstand für eine andere Baumaschine oder einen anderen Förderer wie bspw. eine Raupe, einen Bagger, einen Seilbagger, einen Surface-Miner, einen Dump-Truck oder ähnliche Maschinen eingesetzt werden

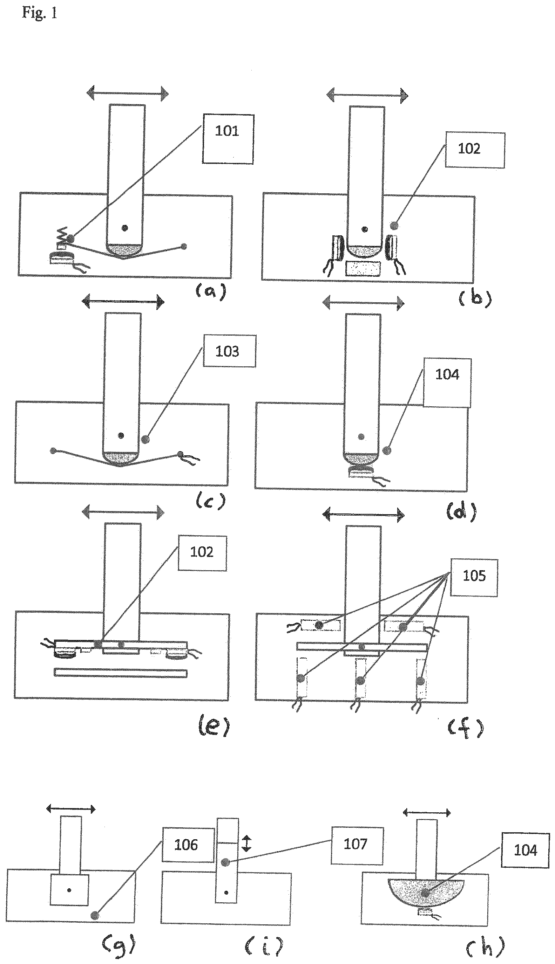

Wie Fig. 1 verdeutlicht, können Steuerhebel des Steuerstands eine Rückstellmechanik besitzen, um im unbetätigtem Zustand automatisch in Nullstellung zu gelangen. Um das Bediengefühl des Gegendruckes, der durch die Rückstellmechanik erzeugt wird, individuell an den Bediener oder auch situationsbedingt anpassen zu können, kann eine Realisierung der Rückstellmechanik über eine Kombination aus Federkraft und Elektromagnet, vgl. Fig.1 Pos. 101, Festmagnet und Elektromagnet, vgl. Fig.1 Pos. 102, ein elektrisch verformbares Material, vgl. Fig.1 Pos. 103, nur über Elektromagnet, vgl. Fig.1 Pos.104, oder ein auf der Drehachse befestigter positionsüberwachter und momentüberwachter elektrischer Antrieb mit Feder-, oder Magnetrückstellung, vgl. Fig.1 Pos.106, angewendet werden.

Dabei kann das Moment frei konfiguriert, personalisiert der jeweiligen Bediensituation - z.B. derart, dass für niedrige Geschwindigkeiten ein höherer Gegendruck vorgesehen wird - angepasst werden, sowie auch eine frei konfigurierbare personalisierte Rastung realisiert werden, indem positionsbedingt das Moment erhöht oder verringert wird. Ebenfalls werden auch Fahrbewegungen fühlbar vorgegeben um z.B. dem Bediener bestimmte Positionen des Meisterschalters aus Assistenzsystemen fühlbar sowie auch über ein im Steuerhebel integriertes Display sowie LED-Anzeige mitzuteilen. Dabei können diese ebenfalls personalisiert konfiguriert werden.

Das angelegte Moment kann rechnerisch oder messtechnisch über Dehnmessstreifen, das Touchfeld oder -display, über Magnetfeldsensoren oder kapazitiv ermittelt werden, um über eine Regelung Störeinflüsse auszugleichen. Das elektrisch veränderbare Magnetfeld kann auch für die Ermittlung der Position der Meisterschalterstellung verwendet werden. Ein Magnetfeldsensor erfasst dabei das elektrische veränderbare Magnetfeld, wodurch die Position ermittelt wird. Dadurch kann der Festmagnet entfallen.

Eine weitere Option sieht die Positionserfassung über einen induktiven sowie kapazitiven Sensor, vgl. Fig.1 Pos. 105, vor. Die Länge der Steuerhebel können über einen elektrischen Antrieb z.B. in Form eines Spindelantriebs oder mechanisch bspw. durch eine Rastung und/oder Klemmverbindung personalisiert verstellt werden, vgl. Fig.1 Pos. 107. Dadurch kann jeder Bediener seine gewünschte Länge einstellen und diese Einstellung personalisiert in der Kransteuerung ablegen.

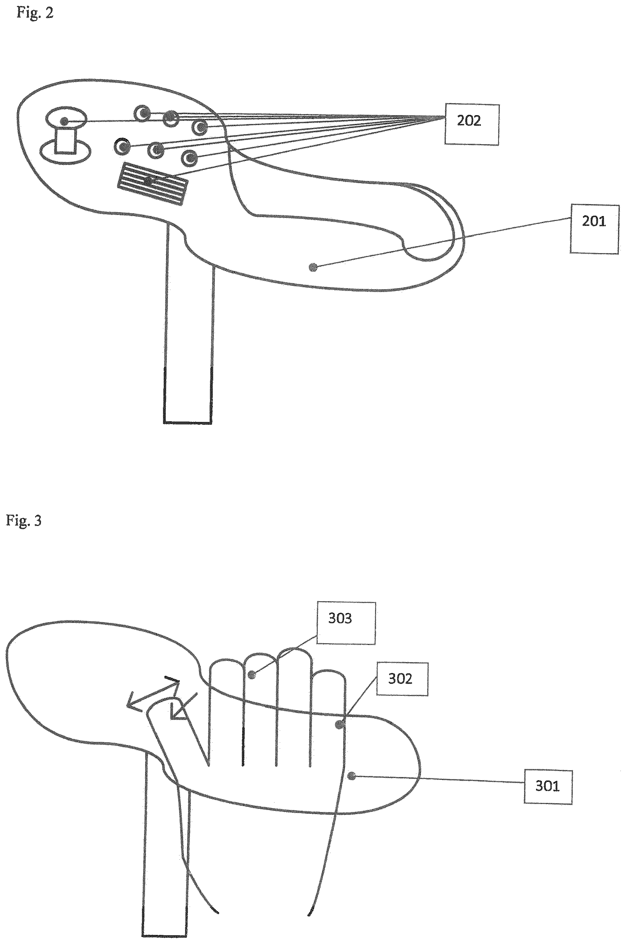

Die Steuerhebel ( vgl. Fig. 2 Pos. 201) des Steuerstandes beinhalten frei konfigurierbare Bedienelemente (vgl. Fig.2 Pos. 202), z.B. Joysticks, Buttons, Scrollräder, die personalisiert konfiguriert werden können. Somit besteht die Möglichkeit für den Kranführer sich sämtliche Funktionen für die Bedienung und Einstellung des Kranes, der Ausrüstungen, der Kabine, des Displays, des Steuerstandes sowie der Baustellenverwaltungsprogramme, auf die für ihn am besten geeigneten Bedienelemente zuweisen zu können.

Eine weitere Option sieht ein ergonomisch haptisches 3D Touch-Display mit Sensorfläche (Fig.3 Pos. 302) auf der vorzugsweise gesamten Oberfläche des Steuerhebels (Fig.3 Pos.1) vor. Diese erfasst, bspw. radartechnisch, optisch, kapazitiv, resistiv, akustisch und/oder über elektrisch messbare Veränderungen den Fingerabdruck sowie die Bewegung und/oder den Druck der angelegten Finger und Hand (Fig.3 Pos.3). Dies ermöglicht die personalisierte Zuweisung von sämtlichen Funktionen für die Bedienung und Einstellung des Kranes, der Ausrüstungen, der Kabine, des Displays, des Steuerstandes sowie der Baustellenverwaltungsprogramme, auf die Bewegung und/oder Druck von definierten Fingern.

Hierdurch kann ohne Suchen von bestimmten Bedienelementen personalisiert definierte Bedienbefehle ausgeführt werden. Ebenfalls kann die Erfassung auch für die Realisierung der sog. Totmann-Funktion verwendet werden. Es kann individuell personalisiert bestimmt werden, welcher Bereich der Hand erfasst werden soll, bspw. um die genannteTotmann-Funktion zu realisieren.

Durch die Visualisierung können auch Informationen auf dem Steuerhebel dargestellt werden, sowie aktive Finger, die eine Funktion ausführen, beleuchtet, hinterlegt oder umrandet oder in anderer Weise markiert werden.

Die Oberflächenstruktur eines solchen oder eines anderen Displays kann auch vorzugsweise elektrisch personalisiert verändert werden, um Bedienelemente spürbar zu machen, bspw. indem Vibrationen oder sogar Sound erzeugt werden. Dies ermöglicht das Erfühlen von Bedienelementen, Gefahren, Strukturen, sowie Informationen über punktuelle oder flächige Vibrationen oder Geräuschen an den Bediener zu übertragen.

Ebenfalls können auch Gesten sowie Positionen erfasst werden, um personalisiert definierte Funktionen für die Bedienung und Einstellung des Kranes, der Ausrüstungen, der Kabine, des Displays, des Steuerstandes sowie der Baustellenverwaltungsprogramme, auszuführen. Notwendige sowie personalisierte Informationen werden aufgrund der Erfassung der Hand an freien Stellen eingeblendet werden um eine bessere Übersicht zu gewährleisten.

Die Positionen der Anzeigeelemente und personalisierte Informationen sind vorteilhafterweise dynamisch ausgebildet und verändern ihre Position bei der Bewegung der Hand und/oder des Steuerhebels, um immer sichtbar für den Bediener zu sein. Zusätzliche Animationen können zusätzliche notwendige Informationen zur Verfügung stellen, wie z.B. die Bedienung des Steuerhebels oder des zu bedienenden Systems.

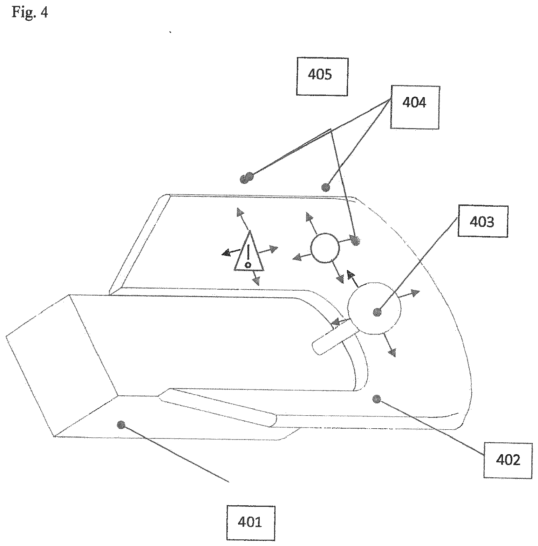

Ein ergonomisch um die Armlehne (Fig.4 Pos. 401) angebrachtes haptisches 3D Touch-Display (Fig.4 Pos. 402) ermöglicht die individuelle personalisierte Visualisierung von Bedien- und Anzeigeelementen, sowie notwendige oder personalisierte Informationen (Fig.3 Pos. 404). Dadurch kann eine optimale Erreichbarkeit sowie Sichtbarkeit der Bedien- und Anzeigeelemente sowie notwendige und personalisierte Informationen erreicht werden.

Den Bedienelementen können individuelle personalisierte Funktionen für die Bedienung und Einstellung des Kranes, der Ausrüstungen, der Kabine, des Displays, des Steuerstandes sowie der Baustellenverwaltungsprogramme und/oder anderer Funktionsbausteine, zugewiesen werden. Die Positionen der Bedien- und Anzeigeelementen sowie personalisierte Informationen sind vorteilhafterweise dynamisch und können sich beispielsweise der Bewegung des Steuerhebels (Fig.4 Pos. 403) anpassen. Die Veränderungen der Positionen können ebenfalls personalisiert konfiguriert werden. Dies ermöglicht eine sehr gute Erreichbarkeit aller Bedienelemente in jeder Position des Steuerhebels.

Vorteilhafterweise kann die gesamte Displayfläche für die Bewegung der Bedien- und Anzeigeelemente (Fig.4 Pos. 405) zur Verfügung stehen.

Auf diesem oder einem anderen Display kann bei Bedarf die gesamte Baustelle mit dem zu steuernden Gerät - als insbesondere dem Baukran und ggf. weiterer Baumaschinen wie Bagger, Raupe etc. - abgebildet sowie notwendige Situationen markiert oder anderweitig hervorgehoben werden. Dabei werden dem Bediener nach personalisierten Bedarf vorteilhafterweise unterschiedliche Kamerapositionen und/oder Animationen dargestellt. Notwendige Informationen können spürbar hervorgehoben werden. Dies vereinfacht das Erfühlen von Informationen, Gefahren, Strukturen sowie Steuerelementen ohne eine direkte Sicht auf das Display zu haben.

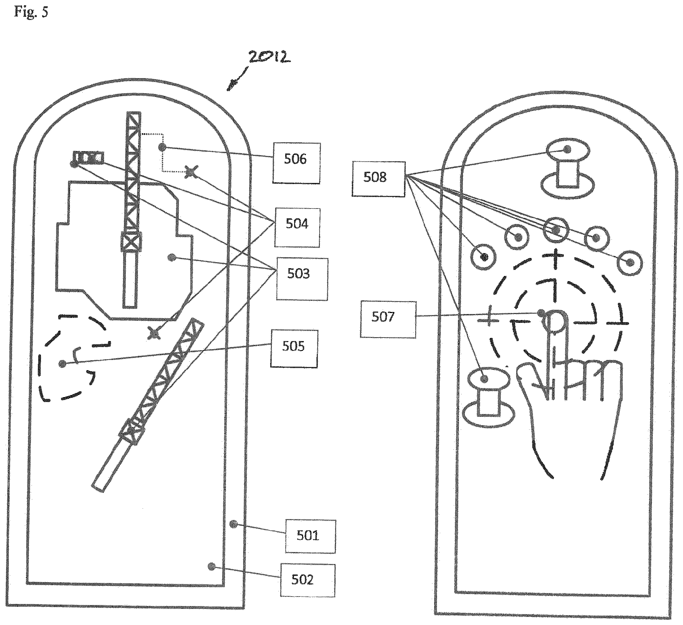

Beispielsweise können einem autonom verfahrbaren bzw. gesteuerten Kran die gewünschten Zielpositionen (Fig.5 Pos. 504) z.B. in Form der Ortspunkte für die Aufnahme und das Absetzen der Last und/oder ein gewünschter Verfahrweg horizontal und/oder vertikal (Fig.5 Pos. 506) vorgegeben werden. Die Aufnahme und Ablege-Ziele der Last sowie Verfahrwege können dabei priorisiert oder nach Auftragseingang animiert dargestellt werden. Unterschiedliche Formen und Farben sowie eine dynamische Nummerierung mit Zahlen und/oder Buchstaben können für die individuelle personalisierte Darstellung verwendet werden. Dadurch wird vereinfacht die Priorisierung der notwendigen Arbeitsaufträge dargestellt. Die gewünschten Aufträge können durch das Baustellenpersonal oder von der Baustellenverwaltung über eine Funk- oder eine Kabelverbindung an die Steuerung vermittelt werden. Dadurch können auch Aufträge von mehreren Kranen auf dem Display dargestellt werden.

Es besteht auch die Möglichkeit über eine Funk- oder Kabelverbindung die Steuerung eines anderen Gerätes zu übernehmen, wodurch durch einen Kranfahrer mehrere Geräte bedient werden können. Gesperrte Bereiche für den Lasthaken (vgl. Fig.5 Pos. 505) werden ebenfalls dargestellt wodurch mit einem Blick ersichtlich ist, welcher Weg der Kran fahren darf. Ebenfalls können auch Gesten sowie Positionen erfasst werden, um bestimmte Funktionen für die Bedienung und Einstellung des Kranes, der Ausrüstungen, der Kabine, des Displays, des Steuerstandes sowie der Baustellenverwaltungsprogramme auszuführen.

Auch hier kann eine spezielle Sensoroberfläche vorgesehen sein, die der Erfassung des Fingerabdrucks sowie der Bewegung und/oder des Drucks dient. Dadurch können ebenfalls personalisiert konfigurierte Bedienfunktionen einzelner Finger zugewiesen werden. Alternativ oder zusätzlich können auch Gesten sowie Positionen erfasst werden, um bestimmte Funktionen auszuführen. Z.B. können Bedienelemente nur beim Annähern der Finger am Display an den nicht bedeckten Stellen eingeblendet werden um eine bessere Übersicht zu gewährleisten oder das vereinfachte Umschalten von Anzeigebildern zu ermöglichen.

Die Oberflächenstruktur des Displays kann vorteilhafterweise elektrisch personalisiert verändert werden, um Bedienelemente spürbar zu machen sowie Vibrationen oder sogar Sound zu erzeugen. Dies ermöglicht das Erfühlen von Bedienelementen, Gefahren, Strukturen, sowie Informationen über punktuelle oder flächige Vibrationen oder Geräuschen an den Bediener zu übertragen. Notwendige sowie personalisierte Informationen können aufgrund der Erfassung der Hand sowie der Blickrichtung des Bedieners über Positionsgeber, was bspw. optisch, radartechnisch, kapazitiv, induktiv und/oder durch eine oder mehrere Kameras erfolgen kann, an freien sichtbaren personalisiert konfigurierbaren Stellen eingeblendet, um eine bessere Übersicht zu gewährleisten. Die Positionen der Anzeigeelemente und personalisierte Informationen sind vorteilhafterweise dynamisch und verändern ihre Position bei der Bewegung der Hand und/oder des Kopfes, um immer sichtbar für den Bediener zu sein.

Eine weitere Option sieht ein ergonomisch geformtes haptisches 3D Touch-Display mit Sensorfläche (Fig.5 Pos. 502) auf der Oberseite der Armlehne (Fig.5 Pos. 501) vor, wobei der Steuerhebel entfallen kann. Auf diesem Display kann die gesamte Baustelle mit dem zu steuernden Gerät - insbesondere dem Baukran und ggf. anderen Baumaschinen wie Bagger, Raupe etc. - abgebildet sowie notwendige Situationen markiert oder anderweitig hervorgehoben werden. Dabei werden dem Bediener vorzugsweise nach personalisierten Bedarf unterschiedliche Kamerapositionen sowie Animationen dargestellt.

Notwendige Informationen können spürbar hervorgehoben werden. Dies vereinfacht das Erfühlen von Informationen, Gefahren, Strukturen sowie Steuerelementen ohne eine direkte Sicht auf das Display zu haben. Es können dem autonomen Kran die gewünschten Zielpositionen (Fig.5 Pos. 504) (z.B. Aufnahme und Absetzen der Last) sowie ein gewünschter Verfahrweg horizontal und/oder vertikal (Fig.5 Pos. 506) vorgegeben werden. Die Ziele sowie Verfahrwege können priorisiert oder nach Auftragseingang animiert dargestellt werden. Unterschiedliche Formen und Farben sowie eine dynamische Nummerierung mit Zahlen und/oder Buchstaben können für individuelle personalisierte Darstellung verwendet werden. Dadurch wird vereinfacht die Priorisierung der notwendigen Arbeitsaufträge dargestellt. Die gewünschten Aufträge können durch das Baustellenpersonal oder von der Baustellenverwaltung über eine Funk- oder eine Kabelverbindung an die Steuerung vermittelt werden. Dabei können auch Aufträge von mehreren Kranen auf dem Display dargestellt werden.

Es besteht auch die Möglichkeit über eine Funk- oder Kabelverbindung die Steuerung eines anderen Gerätes zu übernehmen, wodurch durch einen Kranfahrer mehrere Geräte bedient werden können. Gesperrte Bereiche für den Lasthaken (Fig.5 Pos. 505) können ebenfalls dargestellt werden, wodurch mit einem Blick ersichtlich ist, welcher Weg der Kran fahren darf.

Ebenfalls können auch Gesten sowie Positionen erfasst werden, um bestimmte Funktionen für die Bedienung und Einstellung des Kranes, der Ausrüstungen, der Kabine, des Displays, des Steuerstandes sowie der Baustellenverwaltungsprogramme auszuführen.

Vorteilhafterweise werden Bedienelemente nur beim Annähern der Finger am Display eingeblendet um eine bessere Übersicht zu gewährleisten.

Die Funktionen für die Bedienung und Einstellung des Kranes, der Ausrüstungen, der Kabine, des Displays, des Steuerstandes sowie der Baustellenverwaltungsprogramme können auch direkt über Bedienelemente (Fig.5 Pos. 508) oder über ein dargestelltes Fadenkreuz oder andere Bediensymbole (Fig.5 Pos.507) getätigt werden. Über Sound sowie Vibration können anliegende Fahrbefehle hinterlegt werden um spürbar für den Bediener zu werden wodurch mehrere Sinne für eine Wahrnehmung angesprochen werden.

Notwendige sowie personalisierte Informationen können aufgrund der Erfassung der Hand und/oder der Blickrichtung des Bedieners über Positionsgeber, was bspw. optisch, radartechnisch, kapazitiv, induktiv und/oder durch eine oder mehrere Kameras erfolgen kann, an freien sichtbaren personalisierte Stellen eingeblendet werden, um eine bessere Übersicht zu gewährleisten. Die Positionen der Anzeigeelemente und personalisierte Informationen sind dabei vorteilhafterweise dynamisch und können ihre Position bei der Bewegung der Hand sowie des Kopfes verändern, um immer sichtbar für den Bediener zu sein.

Um eine großflächige Visualisierung zu ermöglichen können auch weitere Displays mit gleichen oder ähnlichen oder anderen Eigenschaften im Arbeitsumfeld angebracht werden.

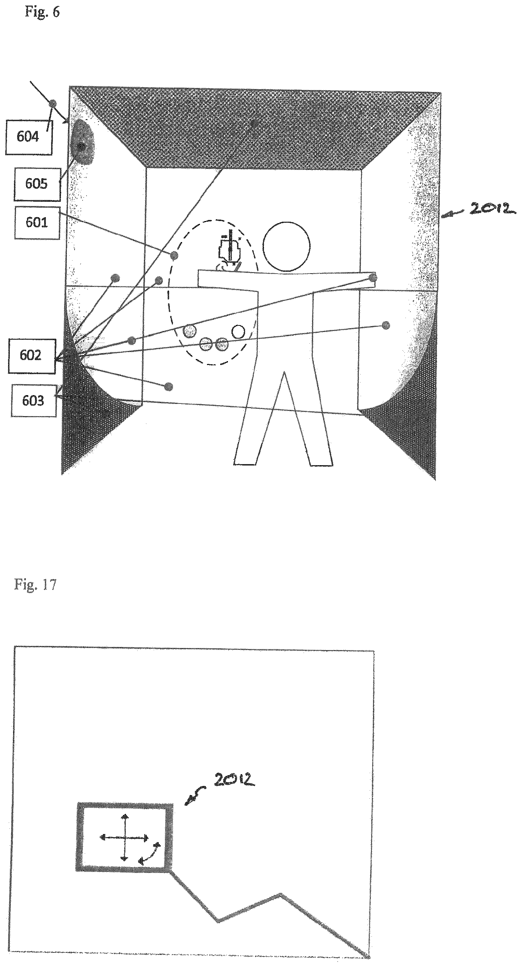

Eine weitere Option sieht eine großflächige, vorzugsweise frei konfigurierbare personalisierte 3D Visualisierungs- und Bedienoberfläche vor, was bspw. über in die Kabinenverglasung (Fig.6 Pos. 601) und/oder in die Verkleidung (Fig.6 Pos. 602) integrierte 3D Displays z.B. basierend auf der OLED Technologie mit oder ohne durchsichtigen Hintergrund und/oder über eine projektierte 3D Visualisierung wie z.B. Head-up-Displays und/oder eine Datenbrille realisiert sein kann. Die Bedienoberfläche kann dabei über eine ergonomische haptische Touch-Oberfläche oder über eine Ganzkörpergestensteuerung realisiert sein. Dies ermöglicht eine Visualisierung sowie Bedienung direkt im Sichtfeld (Fig.6 Pos. 603) des Bedieners.

Dabei können notwendige sowie personalisierte Informationen sowie Bedienelemente auch bei veränderter Position des Blickfeldes immer dargestellt werden. Im Sichtfeld störende Komponenten wie z.B. der Ausleger können mit einem Kamerabild des sich dahinter befindlichen Hintergrundbildes überblendet werden, um auch eine Sicht hinter der störenden Komponente zu ermöglichen. Somit wird die störende Komponente unsichtbar.

Alternativ oder zusätzlich kann auch das einfallende Sonnenlicht (Fig.6 Pos. 604) über die Display Technologie punktuell oder bereichsweise und vorzugsweise personalisiert konfigurierbar abgedunkelt (Fig.6 Pos. 605) werden. Dies kann auch über eine elektrisch personalisiert veränderbare Glasscheibe oder Folie realisiert werden. Die bereits in den vorhergehenden Displays beschriebenen Bedien- und Anzeigekonzepte können ebenfalls mit dieser Ausbildung der Anzeigevorrichtung realisiert werden.

Sämtliche oder einige in der Kabine angebrachten Displays können vorteilhafterweise ihre Leuchtstärke und Lautstärke der Umgebung anpassen. Die Helligkeit und/oder die Lautstärke können über Sensoren am Steuerstand, im Raum, auf dem Kran und/oderoder im Display integriert erfasst werden, so das die Displays dem Umfeld angepaßt werden können, um eine nicht störende Visualisierung ermöglichen zu können.

Dabei sind verschiedene Kombinationen von Sensoren und Displays bzw. Anzeigevorrichtungen möglich. Sämtliche in der Kabine sowie am Kran befindlichen Sensoren, Antriebe, Projektoren, Displays können auch in unterschiedlichen Konstellationen und anders als beschrieben als ein kombiniertes Gerät auftreten, z.B. in Form eines Displays mit Helligkeitssensor, Regen-, und Lichtsensor mit Head-Up Displayprojektor.

Wie Fig. 17 verdeutlicht, können sämtliche oder einige der in der Kabine angebrachten Displays über einen GPS Sensor, Kompasssensor und/oder Gyroskop Sensor verfügen bzw. in Abhängigkeit von Signalen hiervon gesteuert werden. Dadurch besteht insbesondere die Möglichkeit, das Displaybild der gewünschten horizontalen und vertikalen Displayanordnung anzupassen. Das Display kann über ein Mehrgelenkarm oder Lineareinheit mit positionsüberwachten Antrieben frei im Raum positioniert werden, vgl. Fig. 17. Die Positionierung kann hierbei manuell per Hand erfolgen sowie auch über 3D Bedienelemente. Die Anordnung kann in allen Fällen personalisiert gespeichert werden, wobei Einstellungen automatisch gespeichert werden können. Ebenfalls kann das Display in Abhängigkeit der Kopfbewegung, die über ein Kamerabild oder Bewegungssensoren erfasst werden kann, im Raum ausgerichtet werden. Das Kamerabild im Display kann auch sich nach der Kompassrichtung ausrichten um immer die gewünschte Kameraposition und -richtung anzuzeigen.

Der Sitz 2015 des Bedieners sowie der gesamte Steuerstand ist vorteilhaftreweise mit elektrischen und/oder pneumatischen Antrieben ausgestattet, um eine personalisiert konfigurierbare Sitzeinstellung zu ermöglichen. Die Ansteuerung der Antriebe kann hierbei über ein BUS-System sowie über Funk erfolgen.

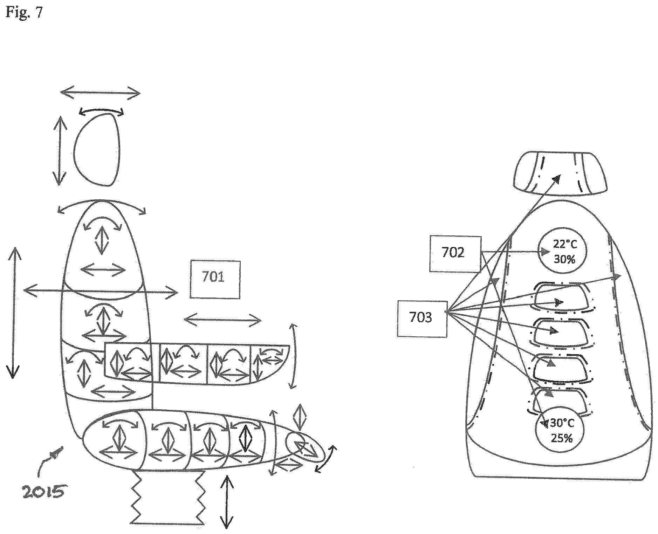

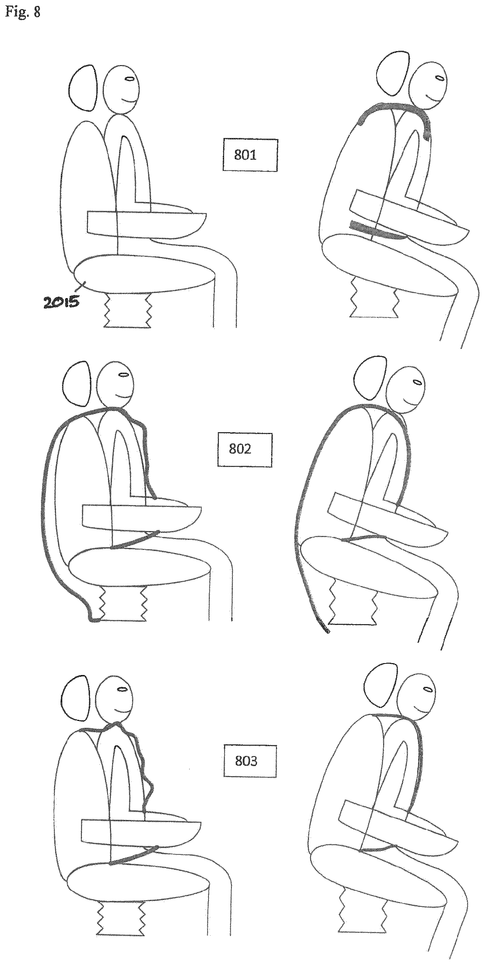

Der Sitz 2015 kann in mehrere Elemente (Fig.7 Pos. 701) unterteilt sein, die einzeln einstellbar sein können. Über Heiz-, Kühl- und/oder Lüftungselemente in den einzelnen Elementen können unterschiedliche Klimazonen in der Position, Größe und Kontur über Display-, Gesten- sowie Spracheingabe vorgegeben werden (Fig.8 Pos. 802). Die Einstellungen werden personalisiert gespeichert und können auch über eine Datum- und Zeitangabe aufgerufen werden um eine bestmögliche Entlastung von einzelnen Körperbereichen zu ermöglichen.

Der Sitz kann auch über eine Massagefunktion verfügegen, in der einzelne Elemente Bewegungen (Fig.7 Pos. 702) durchführen, um die Muskelpartien zu lockern und dadurch körperlichen Schäden durch langes Sitzen vorzubeugen und die Konzentration zu erhöhen.

Der Sitz passt sich vorteilhafterweise automatisch oder halbautomatisch der Körperstatur des Bedieners an. Diese kann über Drucksensoren in der Sitzfläche und/oder optisch über ein Kamerasystem erfasst werden.

Der gesamte Steuerstand und/oder dessen Sitz 2015 passen sich in der Position sowie Ausrichtung vorteilhafterweise selbsttätig dem benötigten Sichtfeld des Bedieners an, um eine angenehme Sichtposition zu ermöglichen. Dabei kann die Blickrichtung über Bewegungssensoren und/oder optisch über ein Kamerasystem erfasst werden. Alternativ oder zusätzlich kann auch die Blickrichtung rechnerisch aus der Position der Last bzw. des Lastaufnahmemittels ermittelt werden.

Ist eine Neigung des Sitzes notwendig oder hilfreich, können Haltebügel elektrisch ausgefahren (Fig.8 Pos. 801), locker sitzende Haltegurte über die Verstellung des Sitzes (Fig.8 Pos. 802) und/oder elektrisch gespannt (Fig.8 Pos. 803) werden. Dadurch wird bei Entbehrlichkeit straffer Haltegurte oder -bügel mehr Sitzkomfort gewährleistet und durch die Automatisierung eine zeitreiche sowie auch fehlerbehaftende Gurtanlegung erspart.

Alternativ oder zusätzlich kann der Sitz 2015 auch eine elektrische-, hydraulische- und/oder pneumatische Drehvorrichtung besitzen. Durch Verdrehen des Sitzes 2015 wird das Einsteigen erleichtert sowie der Blickbereich durch eine situationsbedingte oder manuelle Drehung vergrößert. Der Sitz kann auch in der Höhe elektrisch, pneumatisch und/oder hydraulisch verstellt werden. Dadurch kann die optimale Sitzhöhe für den Fahrer personalisiert ermöglicht werden sowie auch eine Position für erleichtertes Einsteigen in den Sitz 2015 ermöglicht werden.

Um dem Maschinenführer eine optimale Temperatur, Luftgüte und/oder Luftfeuchtigkeit in der Krankabine bzw. am Steuerstand zu ermöglichen, können diese Betriebsparameter bzw. zumindest einzelne hiervon über Sprach- und/oder Gesten- und/oder Touchbefehle auf Displays- und/oder anderen Bediengeräten vorgeben und durch eine Klimaanlage gesteuert bzw. geregelt werden.

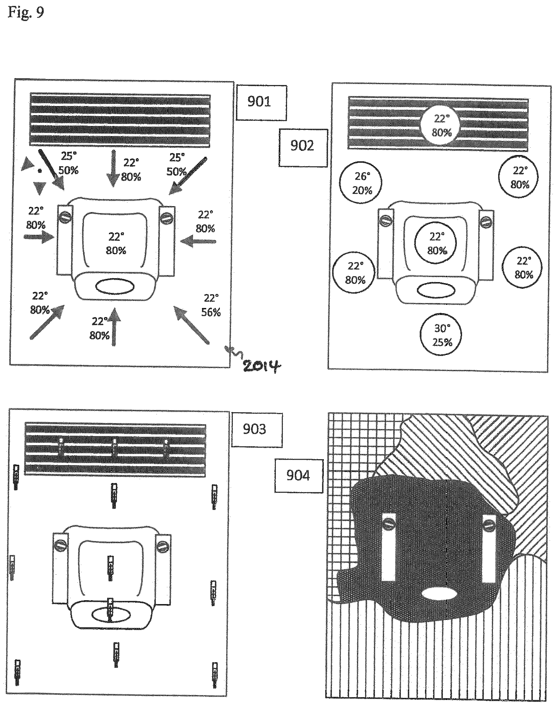

Dabei kann eine Regelung über eine Erfassung mit mehreren in der Kabine angebrachten Temperatur-, Luftfeuchte- und/oder Luftgütesensoren (Fig.9 Pos. 903) und/oder über eine oder mehrere Wärmebildkameras erfolgen, wobei vorteilhafterweise mehrere Klimazonen in der Position, Größe und/oder Kontur (Fig.9 Pos. 902) vorgegeben und eingestellt werden können.

Vorteilhafterweise kann auch die Sonneneinstrahlung kompensiert werden kann (Fig.9 Pos. 904). Die Sonneneinstrahlung kann über Helligkeitssensoren in und/oder außerhalb der Krankabine ermittelt werden.

Es besteht ebenfalls die Möglichkeit, die Richtung der Luftströme und/oder mehrere Klimazonen über Sprach- und/oder Gesten- und/oder Touchbefehle auf Displays und/oder anderen Bediengeräten vorzugeben (Fig.9 Pos. 901).

Eine Regelung der Frischluft sowie des Sauerstoffgehaltes kann manuell sowie automatisch erfolgen. Die Kühlung und Heizung der Kabine kann über Luft sowie über Flüssigkeits-, Gas- oder Elektroklimakomponenten in den Seitenwänden, Decke und Fußboden erfolgen.

Die Krankabine bzw. der Steuerstand verfügt ferner vorteilhafterweise über ein Sprach-, Audio- und Kommunikationssystem, das aus einer Kombination von mehreren Geräten oder in Form eines Komplettgeräts bestehen kann. Das Sprach-, Audio- und Kommunikationssystem kann dabei vorteilhafterweise über die zentralen Displays oder Sensoren in der Krankabine durch Sprach- und/oder Gesten- und/oder Touchbefehle auf Displays und/oder anderen Bediengeräten bedient werden.

Vorteilhafterweise können auch Adressen und Daten mit geeigneten Kommunikationsmitteln über eine Funk- oder Kabelverbindung gestreamt werden. Text- und Sprachkommunikationen können über die Sprach-, Gesten-, und Touchbefehle auf Displays und Bediengeräten angenommen sowie getätigt werden.

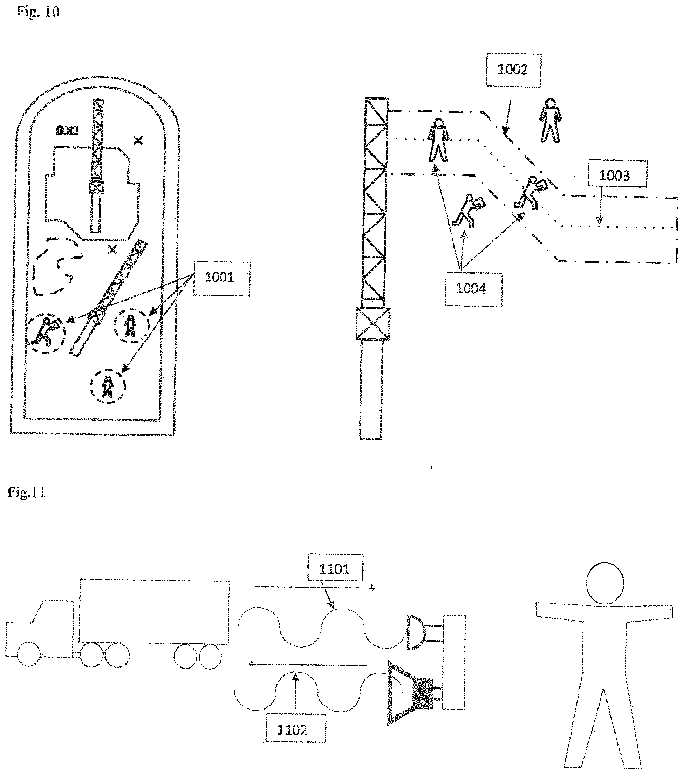

Die auf den integrierten Displays dargestellte Baustelle hebt vorteilhafterweise aufgrund GPS- und/oder Kameraauthentifizierung Personen optisch hervor (Fig.10 Pos.1001), mit denen über Sprach- und/oder Gesten- und/oder Touchbefehle auf Displays und Bediengeräten eine Text- und Sprachkommunikation über Funk oder Kabelverbindung aufgebaut werden kann.

Führt der Kran eine autonome oder durch den Bediener ausgelöste Fahrbewegung (Fig.10 Pos. 1003) durch, kann der Kran automatisch oder der Bediener eine Text- und/oder Sprachnachricht oder eine andere Meldung bspw. in Form einer Vibration von einem Meldegerät an die betroffenen Personen (Fig.10 Pos. 1004) auf der Baustelle senden, wenn sie sich im aktuellen oder zukünftigen Gefahrenbereich (Fig. 10 Pos. 1002) der Last- und Fahrbewegung ausgehend befinden.

Personalisiert freigegebene Kabinen- sowie Fahrfunktionen können auch über die Sprache ausgeführt werden.

Nachrichten sowie notwendige oder hilfreiche Informationen ( wie bspw. Kranstatus, Meldungen von der Kransteuerung, aktueller Wetterbericht oder ähnliches) können über eine Spracheingabe personalisiert abgefragt werden. Die Informationen sowie Kommunikationen werden dem Kranführer vorzugsweise in Sound oder Grafikdarstellung mitgeteilt. Das Kommunikationssystem stellt ferner vorzugsweise eine Funk- und/oder Kabelschnittstelle zu einem übergeordneten Verwaltungs- und Steuerungssystem (z.B. BIM) und ggf. auch zum öffentlichen Internet zur Verfügung.

Der Steuerstand verfügt ferner vorteilhafterweise über ein Notruf- und/oder Warnsystem, das vorzugsweiseeine Notruftaste aufweisen kann, die eine Kommunikation über eine Funk- oder Kabelverbindung bspw. mit der Notrufleitstelle, einem Kranverleih und/oder mit der Sicherheitsleitstelle der Baustelle ermöglicht. Bei Betätigung der Notruftaste kann automatisch eine Sprachnachricht übertragen werden, in der der Zustand des Kranes mitgeteilt wird, z.B. Position, Aufbau, Verfügbarkeit eines Aufzugs sowie die Möglichkeit zum Abrufen oder Bedienen von Kamerasystemen. Ebenfalls besteht die Möglichkeit das der Betroffene selber mit entsprechenden Personen kommunizieren kann.

Ein Notruf kann auch automatisch an personalisiert definierte Personen abgegeben werden, z.B. wenn der Kran einen bestimmten Fehler aufweist oder sich in einer kritischen Situation befindet. Nachrichten können auch über Anzeigeinstrumente und Lautsprecheranlagen an das Umfeld mitgeteilt werden. Das System kann auch frei definierbare Kamerabilder, die für die ersten Unfallabschätzungen notwendig sind, übertragen.

Liegen für den Kran kritische Wettervorhersagen vor, werden frei definierbare Personen über den Zustand sowie erforderliche Maßnahmen zur Sicherung informiert. Die Wetterdaten werden dabei über eine Funk- oder Kabelanbindung von den Wetterdiensten oder Wetterstationen an von anderen Krane übermittelt.

Vorteilhafterweise kann am Steuerstand eine Reduzierung der Umgebungsgeräusche über Gegenschall vorgesehen sein. Vorzugsweise verfügt der Steuerstand hierzu über ein Gegenschallsystem. Dabei wird der auf die Kabine treffende Schall (Fig.11 Pos. 1101) über zumindest ein Mikrofon aufgenommen und über einen Gegenschall (Fig.11 Pos. 1102), der von zumindest einem Lautsprecher erzeugt wird, kompensiert.

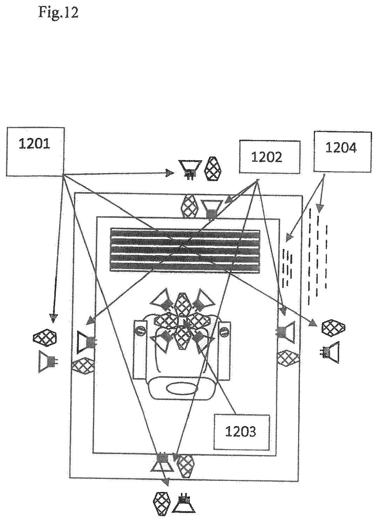

Für eine optimale Effizienz könnenje nach Situation unterschiedliche Positionen der Mikrofone und Lautsprecher notwendig werden. Dabei können sich die Mikrofone und Lautsprecher außerhalb der Kabine (Fig.12 Pos. 1201), in einer doppelten Wand (Fig.12 Pos. 1202), innerhalb der Kabine (Fig.12 Pos. 1203) oder in einer Kombination aus mehreren solchen Anordnungen befinden. Ebenfalls kann auch der Einbauort der Mikrofone und Lautsprecher unterschiedlich sein.

Als Lautsprecher können auch die Kabinenwände und Verglasungen selbst verwendet werden, indem sie bspw. elektrisch punktuell zum Vibrieren gebracht werden (Fig.12 Pos. 1204). Eine haptische Oberfläche auf der Verglasung kann ebenfalls über Vibration den notwendigen Gegenschall erzeugen.

Durch die Gegenschallanlage werden vorzugsweise personalisiert definierte Geräusche in personalisiert definierten Bereiche kompensiert. Dies entlastet den Kranfahrer von lauten Umgebungsgeräuschen wodurch er sich auf relevante Warnsignale, die je nach Sicherheitsrelevanz oder personalisierter Konfiguration kompensiert werden.

Gemäß einem weiteren Aspekt umfaßt der Steuerstand ein Scheibenreinigungssystem, das insbesondere zumindest einen Scheibenwischer 2016 umfassen kann, vgl. Fig. 13.

Als Scheibenwischerantrieb kann zumindest ein vorzugsweise BUS-gesteuerter Motor vorgesehn sein, der eine positionsbezogene Belastungserkennung, Geschwindigkeitsregelung sowie Positionserfassung aufweisen oder zugeordnet haben kann. Vorteilhafterweise kann auch die Versorgungsspannung des zumindest einen Motors überwacht werden. Durch diese Optionen entstehen neue Möglichkeiten um eine scheibenwischerschonende Bewegung zu realisieren.

Der Scheibenwischerantrieb erkennt vorteilhafterweise den Bereich einer Überbelastung. Tritt eine Überbelastung bspw. durch eine Verunreinigung auf der Scheibe auf, versucht der Antrieb nur mit einem für den Antrieb und Mechanik nicht-schädlichen Moment bzw. Kraft, die Verunreinigung der Scheibe zu entfernen. Ist dies nicht möglich, reinigt der Scheibenwischer 2016 nur den nicht verschmutzten Bereich (Fig.13 Pos. 1301), d.h. der Wischbereich wird auf einen durch das Hindernis nicht betroffenen Bereich beschränkt bzw. auf einen Bereich eingestellt, in dem das für den Antrieb und die Mechanik verträgliche Moment ausreichend ist bzw. nicht überschritten wird. Alternativ oder zusätzlich kann eine Überlastabschaltung erfolgen um die Mechanik und die Scheibenwischer zu schonen.

Die Wischerblattstellung wechselt nach Beendigung der Wischzyklen vorteilhafterweise die Ruhelage, um ein einseitiges Verformen des Wischers durch eine konstante Ruheposition zu verhindern (Fig.13 Pos.2).

Ebenfalls kann im Servicefall der Scheibenwischer in eine servicefreundliche Position gefahren (Fig.13 Pos. 1303).

Auf Basis bspw. einer Winkel- und/oder Bewegungserfassung kann über einen Algorithmus eine elektronische Kollisionserkennung mit anderen Scheibenwischern erfolgen (Fig.13. Pos. 1304), wodurch eine kostspielige und platzreiche Mechanik entfallen kann.

Über die bspw. Kamera- und/oder Sensorerfasste Blickrichtung des Kranführers kann nach einem weiteren Aspekt das benötigte Blickfeld berechnet werden. In Abhängigkeit eines solchermaßen bestimmten und/oder gewünschten Blickfelds kann eine Wischer-Steuervorrichtung das Wischfeld des Scheibenwischers begrenzen und/oder anpassen und/oder dynamisch verschieben. Die Wischersteuervorrichtung kann hierzu auch die Position des Lastaufnahmemittels und/oder der Last bestimmen und für die Berechnung des Wischfelds berücksichtigen.

Hierdurch wird auf der Scheibe nur ein minimaler, tatsächlich benötigter oder gewünschtrer Bereich gewischt bzw. gereinigt, wodurch schnellere Wischzyklen aufgrund kürzerer Wege ermöglicht werden.

Ebenfalls ist auch eine manuelle, personalisiert konfigurierbare Auswahl des Wischbereichs möglich.

Ein Wischwasserbehälter verfügt vorteilhafterweise über eine Erkennung des Füllstandes bspw. umfassend einen Füllstandsensor, um dem Kranfahrer die Notwendigkeit des Auffüllens mitzuteilen.

Die Scheibenreinigungsanlage verfügt vorteilhafterweise über einen oder mehrere Regen- und/oder Lichtsensoren, die bspw. optisch, kapazitiv und/oder über eine Widerstandsmessung erfassen, ob die Scheibe verschmutzt ist. Dabei können auch die Richtungen und die Leuchtstärken von umliegenden Lichtquellen optisch aufgenommen werden.

Bei trockener Verschmutzung wird vorzugsweise automatisch bei der Scheibenreinigung eine Sprühanlage aktiviert. Handelt es sich um eine feuchte Verschmutzung ist ein zusätzliches Einschalten der Sprühanlage nicht notwendig. Die Erfassung der Stärke und Richtung der Sonneneinstrahlung ermöglicht das automatische Einschalten und Regeln von Beleuchtungssystemen innerhalb und außerhalb der Krankabine sowie der Baustellenbeleuchtung. Ebenfalls können auch die Verglasungen durch eine personalisiert elektrisch veränderbare Folie oder Glasscheibe in den Bereichen abgedunkelt durch denen die Sonne scheint werden.

Ebenfalls kann dies auch nicht elektrisch über ein lichtveränderliches Material erfolgen.

Ein Regensor bringt einen enormen Vorteil für den Kranfahrer in der Kranbewegung. Nimmt der Kran eine Last auf, in der der Regen von hinten kommt, würde der Scheibenwischer trocken laufen. In diesem Fall erkennt der Sensor, dass kein Regen oder wenig Regen auf der Verglasung ist und reduziert oder stoppt die Wischbewegung. Dreht der Kran nun in den Regen, erkennt der Sensor den Regen und startet oder erhöht die Geschwindigkeit des Wischvorgangs.

Ein elektrischer, hydraulischer und/oder pneumatischer Antrieb mit Positionserfassung am Wischarm sowie am Wischer ermöglicht vorteilhafterweise das automatische Aufstellen des Wischerblattes. Dadurch entfernt sich das Wischerblatt automatisch bei niedrigen Temperaturen von der Verglasung um nicht anzufrieren. Ebenfalls können auch verschmutzte Bereiche, dessen Schmutz nicht entfernt werden kann durch Anheben des Wischerblattes vermieden werden (Fig. 13. Pos. 1305).

Es besteht auch die Möglichkeit zwei Scheiben mit unterschiedlichen Neigungen mit einem Antrieb zu erreichen (Fig. 13. Pos. 1306).

Ein vorzugsweise positionsüberwachter Stellantrieb, der elektrisch, hydraulisch, und/oder pneumatsich arbeitend ausgebildet sein kann und einem Wischerarm zugeordnet ist, kann vorteilhafterweise die Länge des Wischarmes verändern, wodurch das Wischfeld weiter angepaßt werden kann, vgl. Fig. 13g.

Dabei kann dem Wischer ein vorzugsweise positionsüberwachter Drehantrieb, derelektrisch, hydraulisch und/oder pneumatisch arbeitend ausgebildet sein kann, zugeordnet sein, um den vom Wischer überstrichenen Winkelbereich kontrollieren bzw. anpassen zu können. Dies ermöglicht es auch, mit einem Rotationsantrieb ein zumindest näherungsweise rechteckiges Wischfeld zu realisieren, vgl. Fig. 13g.

Es ist auch ein horizontaler positionsgesteuerter Antrieb der Scheibenwischer möglich, der bspw. über eine positionsüberwachte Linbeareinheit, die elektrisch, hydraulisch und/oder pneumatisch angetrieben werden kann, den Wischer horizontal oder vertikal bewegen kann, vgl. Fig. 13h.

Gemäß einem weiteren Aspekt ist eine Kabinenbeleuchtung umfassend Leuchtmittel vorgesehen, die über ein BUS-System oder über eine verbindungsprogrammierte Steuerung angesteuert werden können. Die Leuchtmittel können vorteilhafterweise in ihrer Farbe und/oder Helligkeit verändert werden. Dadurch entstehen neue Möglichkeiten, um diese zur Kommunikation zwischen Baumaschine und Bediener zu verwenden.

Die Beleuchtung kann insbesondere für die farbliche Mitteilung von Informationen (z.B. Farbe Rot: Gefahr, Gelb: Vorwarnung, Grün: Maschine hochgefahren) angesteuert bzw. eingesetzt werden.

Vorteilhafterweise können Lichtfarben und/oder Lichtstärken in verschiedenen Beleuchtungsbereichen individuell geändert werden, wobei insbesondere eine Steuerung in Abhängigkeit eines Betriebsparameters und/oder einer Umgebunsgsitzuation vorgesehen sein kann. Beispielsweise können nur die Bereiche ihre Farbe verändern, die in der Richtung einer Gefahr sind. Wenn bspw. sich hinten links vom Steuerstand oder Kran eine Warnung aufgrund einer Kollision ergibt, dann kann in diesem Bereich die Farbe der Beleuchtung Rot automatisch gemacht werden.

Es besteht alternativ oder zusätzlich auch die Möglichkeit, unterschiedliche Blinkmuster in unterschiedlichen oder gleichen Farben und/oder in unterschieldichen Lichtstärken zu realisieren.

Wird es außerhalb der Kabine dunkler, kann dies über einen Helligkeitssensor erfasst werden, wobei mit der zunehmenden Dunkelheit bspw. die Helligkeit in der Kabine bzw. am Steuerstand erhöht werden kann.

Sämtliche Beleuchtungsfunktionen können vorteilhafterweise durch den Bediener konfiguriert werden und personalisiert in der Steuerung abgelegt werden. Dadurch liegt in jedem Betriebsfall die individuell präferierte bzw. am besten geeignete Kabinenbeleuchtung vor. Über einen Algorithmus wird die aktuelle Situation der Baumaschine bewertet und die dementsprechende gewünschte Beleuchtung realisiert. Dadurch können Blendungen, Reflexionen in der Verglasung vermieden werden sowie die Augen geschont werden.

Eine elektrisch veränderbare Verglasung und/oder Folie und/oder ein durch die Leuchtstärke veränderbares Material können Reflexionen vermeiden helfen, die bspw. über über einen Sensor und/oder ein Kamerasystem erfasst werden können. Durch Anpassung der Verglasung und/oder Folie und/oder des durch die Leuchtstärke veränderbaren Materials, was vorzugsweise automatisch in Abhängigkeit der Sensor- bzw. Kamerasignale erfolgen und eine Veränderung der Oberfläche beinhalten kann, 'können solche Reflexionen vermieden werden.

Ebenfalls können durch die vorgenannte bereichsweise Lichtfarben- und/euer Lichtstärkesteuerung bestimmte Kontraste in der Wahrnehmung der Kabine in einer Situation durch andere Farben hervorgehoben werden.

Vorteilhafterweise umfasst der Steuerstand ferner verschiedene Assistenzsysteme:
Zur Müdigkeitserkennung können bspw. über eine Kamera und/oder eine optische Sensorik Körperreaktionen und/oder -verhaltensweisen erfaßt und mit bereits bekannten sowie aufgezeichneten Mustern hiervon personalisiert verglichen werden und/oder das Fahrverhalten erfaßt und über einen Algorithmus das erfasste Fahrverhalten mit bereits bekannten sowie aufgezeichneten Mustern hiervon personalisiert verglichen werden. Bei leichten sowie groben Abweichungen von den Referenzmustern wird der Bediener auf seine Müdigkeit hingewiesen, bei groben Abweichungen kann die Kransteuerung die Fahrbefehle übernehmen bzw. übersteuern oder blockieren, um Unfälle zu vermeiden. Ebenfalls können in Gefahr befindliche Personen über eine mobile Funkverbindung oder optisch über Arbeitsscheinwerfer gewarnt werden.

Ferner können auch Assistenzsysteme für wirtschaftliche und materialschonende Arbeitsweise vorgesehen sein. Beispielsweise kann der Steuerstand über einen Algorithmus in der Steuerung oder auf einer zentralen Plattform verfügen, den er über eine Kabel- oder Funkverbindung abruft, der für jede Situation die wirtschaftlichste, schnellste oder materialschonendste Arbeits- und Handlingsweise auch in Bezug auf die Last und sicherste Steuerungsbefehle vorschlägt oder auch die Kennlinie der Sollwertverläufe des Steuerhebels vorschlägt.

Eine Mitteilung hierüber kann bspw.optisch über ein Display oder die Kabinenbeleuchtung mit unterschiedlichen Farben erfolgen, und/oder über ein Erhöhen oder verringern des Gegenmoments am Meisterschalter, was über einen elektrischen Antrieb, elektrisch veränderbare Materialen und/oder Magnete erfolgen kann. Die genannte Mitteilung kann personalisiert konfiguriert werden. Dadurch kann man den Bediener spürbar zum optimalen Steuerbefehl hinführen, ohne dass der Bediener auf ein Display schauen muss.

Die Umschaltung der Verhaltensweisen kann auch manuell erfolgen und die Assistenzsysteme können auch personalisiert konfiguriert werden. Der Verlauf des Sollwertes (Fig.14 Pos. 1401) des Meisterschalters in Abhängigkeit zum Ausschlag (Fig.14 Pos. 1402) kann ebenfalls über eine Werteingabe oder punktuelle Verschiebung (Fig.14 Pos. 1403) oder das Zeichnen (Fig.14 Pos. 1404) über Touch- oder Sprachbefehle auf einer Displayanzeige oder in anderer Weise personalisiert konfiguriert werden. Dadurch kann die Reaktion des Krans bzw. der jeweils gesteuerten Maschine dem Bediener angepasst werden.

Ferner ist vorteilhafterweise ein Antikollisionssystem vorgesehen. Dabei besteht die Möglichkeit, andere Krane über den beabsichtigten Verfahrweg zu informieren, um vorzeitig eine Abschaltung aufgrund Kollisionsverhinderung zu vermeiden. Eine auftragsgebundene, vorzugsweise softwareseitige Organisation der Verfahrwege der manuell gesteuerten und/oder sowie autonomen Krane kann Standzeiten aufgrund im Verfahrweg stehender Krane verhindern bzw. zumindest reduzieren. Die Organisation kann in den Kransteuerungen oder in einer zentralen Plattform erfolgen.

Ferner ist vorteilhafterweise ein Wartungsmanagmentsystem vorgesehen. Über einen Algorithmus, der auf einem zentralen Verwaltungssystem oder in der Kransteuerung hinterlegt ist, kann das Fahrverhalten und/oder die Betriebssituationen ausgewertet werden. Daraus können variierende Wartungsintervalle von einzelnen sowie mehreren Komponenten festgelegt werden. Der Termin sowie die Dauer können ständig vom Einsatzplaner, Wartungspersonal sowie vom Kranbediener online sowie über die Kransteuerung abgerufen werden. Ebenfalls stehen auch Schnittstellen zu übergeordneten Verwaltungs- und Steuerungssystem (z.B. BIM) zur Verfügung.

Vorteilhafterweise können sämtliche oder zumindest einige personalisiert konfigurierte Funktionen in der Kransteuerung oder zentral auf einer Onlineplattform über eine Funk- und/oder Kabelverbindung abgelegt und/oder abrufbar bereitgestellt werden. Die Authentifizierung des Bedieners erfolgt bspw. über einen elektronischen Schlüssel, optisch über ein Kamerasystem, Smartphone und/oder über das Einlesen des Fingerabdrucks über einen Fingerabdruckscanner und/oder über ein Touchdisplay.

Über eine zentrale Onlineverwaltung kann der Vorgesetzte die Arbeitsplanung und Auftragsliste an den Kran und an den Bediener auf ein Kommunikationsmittel mitteilen. Der Steuerstand nimmt alle personalisierten Einstellungen (z.B. das Hochfahren des Systems, Sitzeinstellungen, Steuerhebelkonfiguration, Raumklima) vor Arbeitsbeginn vor, damit der Bediener sofort die der Kransteuerung und/oder auf das Kommunikationsmittel mitgeteilte Aufgabenliste abarbeiten kann.

Ebenfalls besteht auch die Möglichkeit, dass der Bediener sich ebenfalls über ein Kommunikationsmittel seinen Arbeitsbeginn oder Ende auf einem bestimmten Gerät mit Datum und Uhrzeit auf einem Gerät anmelden kann, wobei der Steuerstasnd in Abhängigkeit hiervon vor Arbeitsbeginn alle notwendigen Einstellungen vornehmen kann. Die Bestätigung des Bedieners kann über die Authentifizierung erfolgen, die auch zur Arbeitszeiterfassung genommen werden kann, wobei diese dann ebenfalls einem Portal mitgeteilt werden kann.

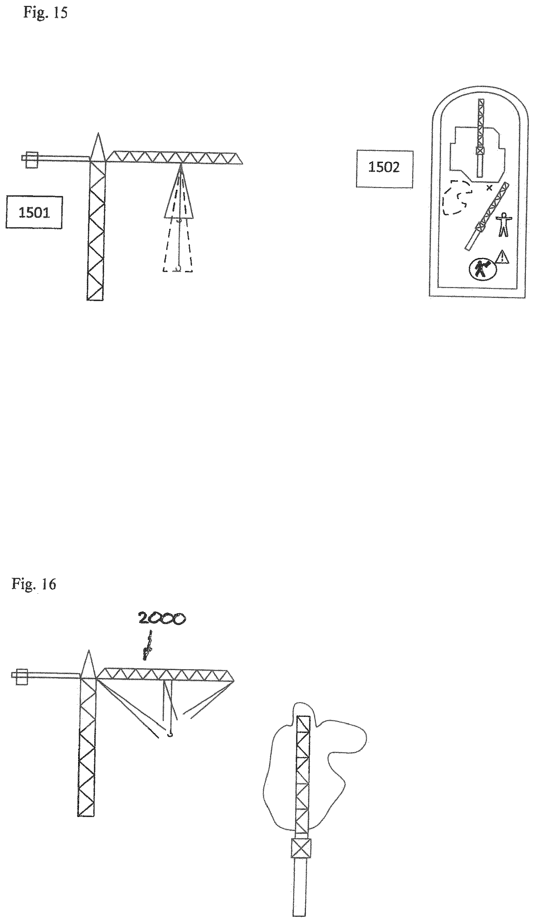

Wie Fig. 15 zeigt, kann der Kran 2000 ein Kamerasystem aufweisen, das vorteilhafterweise zumindest über eine Motorzoomkatzkamera verfügt, die an der Laufkatze des Auslegers angebracht sein kann, wobei automatisch mit der Senktiefe dessen Zoom nachskaliert (Fig.15 Pos. 1501) werden kann. Ebenfalls besitzt der Kran 2000 vorteilhafterweise mehrere Kameras, die eine 360° Draufsicht des Gerätes und der Baustelle ermöglichen.

Die Kameras des Kamerasystems können ferner eine Infrarot- und Wärmebildfunktion besitzen, die für die Nachtsicht geeignet ist.

Ebenfalls kann durch die Kamerasysteme die Baustelle überwacht werden. Z.B. können Bewegungen von Personen registriert und an eine Zentrale gemeldet werden. Dabei wird das Wachpersonal über eine Authentifizierung z.B. über Kamera, GPS-Sensor oder eine Ortung von Funksender oder mobile Kommunikationsmittel herausgefiltert (Fig.15 Pos. 1502).

Eine Kamera, die auch ein 360° Bild aufnehmen kann, befindet sich direkt am Haken ermöglicht ein vereinfachtes Positionieren und Absetzen der Last. Die Skalierung der Kamera auf die Größe der Last erfolgt über eine bildliche Auswertung. Ultraschallsensoren am Kranhaken erfassen das Umfeld und ermöglichen Angaben im Displaybild zur Distanz zu den im Kamerabild erfassten Objekten sowie deren Größe. Die Distanz und Größe kann auch über einen Algorithmus aus dem Kamerabild berechnet werden.

Der Blick auf den Gegenausleger erfolgt über Kameras, die Bilder auf Displays projektzieren die in der Kabine an den Positionen der Seitenspiegel und/ oder Rückspiegel angeordnet sind. Ebenfalls besteht auch die Möglichkeit die Kamerabilder unter den Krane über eine Funk- oder Kabelverbindung zuzugreifen, um ein größerer Blickbereich zu erreichen.

Am Kranhaken ist vorteilhafterweise eine Sprechanlage zur Krankabine montiert, die eine Kommunikation zwischen Bauarbeiter und Kranbediener ermöglicht. Sie besitz ein Mikrofon sowie einen Lautsprecher. Es besteht ebenfalls die Möglichkeit mit anderen Krane eine Kommunikation über eine Funk- sowie Kabelverbindung aufzubauen.

Wie Fig. 16 zeigt, kann der Kran 2000 einen oder mehrere Scheinwerfer besitzen, die mehrere Leuchtmittel mit der Möglichkeit eine oder mehrere Farben darzustellen, umfassen können. Dabei können sich die Leuchtmittel auch auf einem einzelnen oder mehreren Microchips befinden.

Aufgrund der größeren Anzahl von Lichtquellen kann der Bereich der Ausleuchtung und der Lichtkegel gesteuert werden ggf. auch ohne Verdrehen der Scheinwerfer durch Verändern der Lichtstärke (Fig.16) eingestellt werden, wobei jedoch ein Verdrehen der Scheinwerfer gleichwohl vorgesehen sein kann.

Die Scheinwerfer können geeignete Optiken und/oder Laserleuchtmittel aufweisen, um starke punktuelle Ausleuchtungen zu gewährleisten.

Über eine optische Erfassung durch Kameras oder Sensoren kann über eine Sprach- oder Toucheingabe auf einem Display der auszuleuchtende Bereich frei personalisiert konfiguriert werden. Ebenfalls können auch nur notwendige Bereiche für den Betrieb ausgeleuchtet werden wie z.B. Lasthaken oder Zielpositionen in einer anderen Farbe oder auch nur die Bereiche, die für das Wachpersonal notwendig sind. Dafür wird ebenfalls die Authentifizierung des Personals verwendet.

Über Laserlicht können auch Fahrbewegungen, -richtungen und/oder Verfahrwege z.B. auch beim autonomen Kran auf die Baustelle projeziert werden, um das Baustellenpersonal auf die Situation hinzuweisen. Ebenfalls können auch im Fahrweg befindliche Personen über eine Kamera erfasst werden und mit Hilfe der Beleuchtung darauf hingewiesen werden.

Die Scheinwerfer können sich an unterschiedlichen Positionen am Kran befinden, wie z.B. am Lasthaken. Aufgrund der punktuellen Ausleuchtung wird der Lichtsmog reduziert und Energie gespart.

Ebenfalls sind an dem Kran auch geformte Lichtelemente angebracht, die dem Kran in der Nacht ein optisches Gesicht geben können. Auf der Außenseite der Kabine können auch Displays angebracht werden, die eine Visualisierung von Werbung oder anderen Informationen bspw. über die Baustelle ermöglichen. Diese können auch über einen Projektor auf die Außenseite projiziert werden.

## Patentansprüche

1. Steuerstand zum Steuern eines Krans, eines Baggers, einer Raupe oder einer ähnlichen Baumaschine, mit einem Sitz (701), mehreren Steuerelementen (202) zum Eingeben von Steuerelementen zumindest einer Anzeigevorrichtung (402, 502, 602) zum Anzeigen von Informationen, sowie einer Steuereinheit zum Erzeugen von Stellsignalen in Abhängigkeit eingegebener Steuerbefehle und/oder zum Bereitstellen von Informationen an die Anzeigefunktionen, **dadurch gekennzeichnet, dass** eine Erfassungseinrichtung zum Erfassen einer Kopfstellung und/oder Blickrichtung des Maschinenführers und/oder zum Erfassen einer Lastaufnahmemittel- und/oder Lastposition sowie eine Sitzausrichtungs-Einstellvorrichtung zum automatischen Verkippen und/oder Verdrehen des Sitzes (2015) in Abhängigkeit der erfassten Kopfstellung und/oder Blickrichtung des Maschinenführers und/oder in Abhängigkeit der erfassten Lastaufnahmemittel- und/oder Lastposition vorgesehen sind.

2. Steuerstand nach dem vorhergehenden Anspruch, wobei dem Sitz (2015) zumindest ein Haltegurt und/oder -bügel (801) zum Zurückhalten des Maschinenführers auf dem Sitz (2015) zugeordnet ist, wobei eine automatische Spannvorrichtung zum Spannen des Haltegurts und/oder -bügel (801) in Abhängigkeit einer Verkippung des Sitzes (2015) vorgesehen ist.

3. Steuerstand nach einem der vorhergehenden Ansprüche, wobei Erfassungsmittel zum automatischen Erfassen einer Körperstatur und/oder Körperfülle eines Maschinenführers und eine Einstellvorrichtung zum automatischen Einstellen zumindest eines Betriebsparameters des Sitzes (2015) in Abhängigkeit der erfassten Körperstatur und/oder Körperfülle vorgesehen sind.

4. Steuerstand nach dem vorhergehenden Anspruch, wobei die Erfassungsmittel zum Erfassen der Körperstatur und/oder Körperfülle zumindest einen Drucksensor in einer Sitzfläche des Sitzes (2015) und optische Erfassungsmittel zum Erfassen der Körpergröße des Maschinenführers aufweisen, wobei zumindest einer der folgenden Betriebsparameter des Sitzes einstellbar ausgebildet ist: Sitzhöhe, Feder- und/oder Dämpfungsstärke, Sitzneigung, Rückenlehnenneigung, Seitenwangenkontur.

5. Steuerstand nach einem der vorhergehenden Ansprüche, wobei die Anzeigevorrichtung (2012) eine sich dynamisch positionsverändernde Anzeige von Anzeige- und/oder Steuerelementen vorsieht, wobei eine Erfassungseinrichtung zum Erfassen einer Kopfposition und/oder Blickrichtung des Maschinenführers und/eine Erfassungseinrichtung zum Erfassen der IstPosition eines Lastaufnahmemittels und/oder einer aufzunehmenden Last vorgesehen ist, wobei die Steuereinheit (2004) ein dynamisches Verschieben der Anzeige- und/oder Steuerelemente auf der Anzeigeoberfläche der Anzeigevorrichtung (2012) in Abhängigkeit der erfassten Kopfposition und/oder Blickrichtung des Maschinenführers und/oder in Abhängigkeit der erfassten Lastaufnahmemittel- und/oder Lastposition vorsieht derart, dass die Anzeige- und/oder Steuerelemente im Blickfeld des Maschinenführers bleiben.

6. Steuerstand nach einem der vorhergehenden Ansprüche, wobei eine Mehrzonen-Klimaanlage zum zonenweise unterschiedlichen Regeln der Lufttemperatur und/oder -güte und/oder -feuchtigkeit vorgesehen ist, wobei eine Klima-, Steuer- und/oder Regeleinrichtung Einstellmittel zum Einstellen individueller Sollwerte für die verschiedenen Klimazonen besitzt.

7. Steuerstand nach dem vorhergehenden Anspruch, wobei die Anzeigevorrichtung (2012) eine Anzeigeoberfläche zum Anzeigen der Klimazonen besitzt und die Einstellmittel eine Gesten- und/oder Berührungs-Erfassungssensorik zum Erfassen von Gesten und/oder Berührungen an der Anzeigeoberfläche aufweisen, wobei die Mehrzonen-Klimaanlage hinsichtlich der Größe und/oder Position und/oder Kontur der Klimazonen relativ zum Sitz (2015) variabel einstellbar ausgebildet ist.

8. Steuerstand nach einem der vorhergehenden Ansprüche, wobei eine Kommunikationsvorrichtung zum Kommunizieren von Sprach- und/oder Textmeldungen vorgesehen und an die Anzeigevorrichtung (2012) angebunden ist, die eine Kommunikations-Anzeigeoberfläche zum Anzeigen von Kommunikationsinformationen aufweist, wobei die Kommunikations-Anzeigeoberfläche eine Darstellung des Arbeitsbereichs und darin befindlicher, möglicher Kommunikationspartner aufweist, wobei insbesondere
- Markierungsmittel zum Hervorheben eines Kommunikationspartners, zu dem eine Kommunikationsverbindung aufgebaut ist oder wird, in der Kommunikations-Anzeigeoberfläche, und/oder
- Auswahlmittel zum Auswählen eines in der ArbeitsbereichsDarstellung angezeigten Kommunikationspartners vorgesehen sind und die Kommunika-tionsvorrichtung in Abhängigkeit einer in der Arbeitsbereichsdarstellung vorgenommenen Auswahl eine Kommunikationsverbindung zu dem ausgewählten Kommunikationspartner aufbaut, und/oder
- eine Kollisionsprüfvorrichtung anhand eines aktuellen oder geplanten Verfahrwegs eine mögliche Kollision zu einem im Arbeitsbereich befindlichen Kommunikationspartner prüft und die Kommunikationsvorrichtung dazu ausgebildet ist, eine Kommunikationsverbindung zu dem Kommunikationspartner automatisch aufzubauen, sobald die Kollisionsprüfvorrichtung eine mögliche Kollision zu dem genannten Kommunikationspartner bestimmt, wobei die Kommunikationsvorrichtung vorzugsweise eine Notruftaste zum Aufbauen einer Notrufverbindung aufweist und dazu ausgebildet ist, bei Aufbau einer Notrufverbindung ergänzende Betriebsdaten umfassend Sensordaten und/oder Kamerabilder zu übertragen, wobei insbesondere eine Wettererfassungsvorrichtung zum Erfassen von Wetterdaten und/oder Wettervorhersagedaten vorgesehen ist und die Kommunikationsvorrichtung dazu ausgebildet ist, in Abhängigkeit der erfassten Wetter- und/oder Wettervorhersagedaten automatisch eine Wetternotrufverbindung aufzubauen.

9. Steuerstand nach einem der vorhergehenden Ansprüche, wobei eine Gegenschallvorrichtung zum Kompensieren von Umgebungsschall und/oder Reduzieren von auf den Maschinenführer am Sitz (2015) einwirkenden Schallbelastungen vorgesehen ist, wobei die genannte Gegenschallvorrichtung zumindest einen Schallerfassungssensor, insbesondere ein Mikrofon, und zumindest einen Schallerzeuger zum Erzeugen von Gegenschall umfasst, wobei eine Gegenschall-Steuervorrichtung den Schallerzeuger in Abhängigkeit eines Signals des zumindest eines Schallerfassungssensors vorgesehen ist.

10. Steuerstand nach dem vorhergehenden Anspruch, wobei der zumindest eine Schallerzeuger zumindest einen Vibrator umfasst, der an einer Kabinenwandung und/oder Kabinenverglasung angebracht und dazu vorgesehen ist, eine Kabinenwandung und/oder Kabinenverglasung zum Vibrieren zu bringen, wobei mehrere Schallerfassungssensoren, von denen
- zumindest ein Schallerfassungssensor außerhalb einer Führerkabine vorgesehen ist,
- zumindest ein Schallerfassungssensor innerhalb der Führerkabine vorgesehen ist und/oder innerhalb einer doppelten Kabinenwandung vorgesehen ist,
und/oder mehrere Gegenschallerzeuger vorgesehen sind, von denen
- zumindest ein Gegenschallerzeuger außerhalb der Führerkabine angeordnet ist,
- zumindest ein Gegenschallerzeuger innerhalb der Führerkabine und/oder innerhalb einer doppelten Kabinenwandung angeordnet ist.

11. Steuerstand nach einem der vorhergehenden Ansprüche, wobei eine Scheibenwischervorrichtung mit zumindest einem Scheibenwischer (2016) zum Wischen einer Führerkabinenverglasung vorgesehen ist, wobei ein Wischbereich des Scheibenwischers (2016) in Abhängigkeit zumindest eines Betriebsparameters des Steuerstands und/oder des vom Steuerstands zu steuernden Maschine variabel einstellbar ist.

12. Steuerstand nach dem vorhergehenden Anspruch, wobei eine Erfassungseinrichtung zum Erfassen eine Wischwiderstands und/oder eines Wischhindernisses vorgesehen ist, wobei der Wischbereich des Scheibenwischers (2016) in Abhängigkeit des erfassten Wischwiderstands und/oder des Wischhindernisses auf einen Wischbereich begrenzt wird, in dem der erfasste Wischeiderstand unter einem vorbestimmten Grenzwert bleibt und/oder der außerhalb des Wischhindernisses liegt, wobei eine Abhebevorrichtung zum Abheben des Scheibenwischers (2016) von der zu wischenden Scheibenverglasung vorgesehen und in Abhängigkeit eines Signals der Erfassungsvorrichtung derart ansteuerbar ist, dass der Scheibenwischer (2016) über ein erfasstes Wischhindernis und/oder einen Wischbereich, in dem der erfasste Wischwiderstand einen vorbestimmten Grenzwert überschreitet, hinweggehoben wird.

13. Steuerstand nach einem der beiden vorhergehenden Ansprüche, wobei eine Erfassungseinrichtung zum Erfassen der Kopfstellung und/oder der Blickrichtung eines Maschinenführers und/oder zum Erfassen einer Lastaufnahmemittel- und/oder Lastposition vorgesehen ist, wobei der Wischbereich des Scheibenwischers (2016) in Abhängigkeit der erfassten Blickrichtung und/oder Kopfstellung des Maschinenführers und/oder in Abhängigkeit der erfassten Lastaufnahmemittel- und/oder Lastposition automatisch einstellbar ist derart, dass der Wischbereich des Scheibenwischers (2016) mit dem Blickfeld des Maschinführers mitwandert.

14. Steuerstand nach einem der drei vorhergehenden Ansprüche, wobei der Scheibenwischer (2016) einen längenveränderbaren Wischerarm mit einem zugeordneten Längeneinstellaktor aufweist und/oder ein Wischerantrieb einen einstellbaren Bewegungsbereich aufweist.

15. Steuerstand nach einem der vorhergehenden Ansprüche, wobei eine Beleuchtungsvorrichtung zum Beleuchten des Steuerstands mehrere Leuchten zum Beleuchten verschiedener Beleuchtungszonen umfasst, die hinsichtlich ihrer Lichtfarbe und/oder hinsichtlich ihrer Lichtstärke unabhängig voneinander variabel einstellbar sind, um in verschiedenen Beleuchtungszonen verschiedene Lichtfarben und/oder Lichtstärken zu erzeugen.

16. Steuerstand nach dem vorhergehenden Anspruch, wobei eine Kollisionprüfvorrichtung zum Prüfen von möglichen Kollisionen und eine Lichtsteuervorrichtung zum Verändern der Lichtfarbe und/oder Lichtstärke in einer einer möglichen Kollision zugewandten Beleuchtungszone in Abhängigkeit eines Signals der Kollisionsprüfvorrichtung vorgesehen sind, und/oder zumindest ein Helligkeitssensor zum Erfassen der Helligkeit am Steuerstand vorgesehen ist, wobei in Abhängigkeit eines Helligkeitssignals des Helligkeitssensors eine variable Einstellung der Lichtfarbe und/oder Lichtstärke erfolgt.

17. Steuerstand nach einem der vorhergehenden Ansprüche, wobei eine Beleuchtungsvorrichtung zum Beleuchten des Arbeitsbereichs der von dem Steuerstand zu steuernden Maschine vorgesehen ist und mehrere Leuchten zum Beleuchten verschiedener Beleuchtungszonen umfasst, wobei die Leuchten hinsichtlich ihrer Lichtfarbe und/oder Lichtstärke individuell steuerbar ausgebildet sind, um in verschiedenen Beleuchtungszonen unterschiedliche Lichtfarben und/oder Lichtstärken zu erzeugen.

18. Steuerstand nach dem vorhergehenden Anspruch, wobei zumindest eine der Leuchten in ihrer Ausrichtung veränderbar ist, wobei eine Steuervorrichtung zum Steuern der Ausrichtung dieser zumindest einen Leuchte in Abhängigkeit einer Lastaufnahmemittel- und/oder Lastposition derart, dass der von der Leuchte erzeugte Beleuchtungsbereich automatisch mit dem Lastaufnahmemittel und/oder der Last mitwandert, vorgesehen ist, und/oder zumindest eine Leuchte hinsichtlich der Position und/oder Größe und/oder Kontur der von ihr beleuchteten Beleuchtungszone variabel ausgebildet und von einer Steuervorrichtung in Abhängigkeit eines aktuellen oder geplanten Verfahrwegs des Lastaufnahmemittels automatisch ansteuerbar ist derart, dass die von der Leuchte erzeugte Beleuchtungszone den Verfahrweg des Lastaufnahmemittels kennzeichnet und/oder ausleuchtet.

19. Steuerstand nach einem der vorhergehenden Ansprüche, wobei eine Einstellvorrichtung (2010) zum Einstellen und Speichern von individuellen Voreinstellungen von Betriebsparametern und/oder -funktionen der Steuerelemente (2011) und/oder der Anzeigevorrichtung (2012) und/oder weiterer Hilfsaggregate und eine Identifiziereinrichtung zum Identifizieren eines jeweiligen Maschinenführers anhand eines erfassbaren Identifikationsmerkmals vorgesehen sind, wobei die Steuereinheit (2013) dazu ausgebildet ist, die gespeicherten Voreinstellungen anhand eines jeweils erfassten Identifikationsmerkmals vorzusehen, wobei die von der Einstellvorrichtung (2010) einstellbaren Voreinstellungen zumindest eines der nachfolgenden Elemente umfassen:
- einen Bewegungswiderstand und/oder eine Rückstellkraft und/oder ein Rückstellmoment eines Steuerhebels,
- eine Länge eines Steuerhebels,
- eine Position eines grafischen Steuerelements auf einem Touchscreen-Element, und
- die Position eines Anzeige- und/oder Steuerelements auf der Anzeigevorrichtung,
- eine Sitzeinstellung und/oder eine weitere Hilfsaggregateinstellung.

20. Steuerstand nach einem der vorhergehenden Ansprüche, wobei zumindest ein Steuerelement mit unterschiedlichen Steuerungsfunktionen und/oder mit unterschiedlichen Kennlinien belegbar ausgebildet ist und die Belegung des Steuerelements mit einer bestimmten, ausgewählten Steuerfunktion und/oder Kennlinie personalisiert abspeicherbar ist.

21. Steuerstand nach einem der vorhergehenden Ansprüche, wobei die Anzeigevorrichtung (2012) zumindest ein Touchscreen-Display (402, 502) aufweist, das zumindest teilweise die Oberfläche einer Armlehne (501) des Sitzes bildet und/oder sich entlang der Armlehne etwa auf Höhe deren Oberseite erstreckt, wobei das zumindest eine Touchscreen-Display (402) eine dreidimensional konturierte Anzeige- und/oder Berührungsoberfläche aufweist, sich entlang mehrere Seiten der Armlehne erstreckt und einen von der Oberseite der Armlehne aus ansteigenden Kragen bildet.

22. Steuerstand nach einem der vorhergehenden Ansprüche, wobei die Anzeigevorrichtung (2012) zumindest ein Touchscreen-Display (304) aufweist, das in die Oberfläche eines Griffabschnitts eines Steuerhebels (301) integriert ist, wobei das Touchscreen-Display eine inbesondere dreidimensional konturierte Anzeige- und/oder Berührungsoberfläche aufweist, die in die Kontur der Steuerhebeloberfläche eingebettet ist und diese vorteilhafterweise stetig fortsetzt.

23. Steuerstand nach einem der vorhergehenden Ansprüche, wobei die Anzeigevorrichtung (2012) eine Anzeige- und/oder Bedienoberfläche aufweist, die zumindest teilweise eine Führerkabinenverglasung (601) und/oder eine Führerkabinenwandverkleidung bildet und/oder bedeckt.

24. Steuerstand nach dem vorhergehenden Anspruch, wobei zumindest ein Teil der Anzeige- und/oder Bedienoberfläche von einem Touchscreen-Display gebildet ist und/oder der Anzeige- und/oder Bedienoberfläche eine GestenErfassungseinrichtung zum Erfassen von Gesten des Maschinenführers zugeordnet ist, und/oder die Anzeigevorrichtung (2012) eine Überblendungseinrichtung zum Einspielen eines Kamerabilds in den Bereichen der Anzeige- und/oder Bedienoberfläche auf einen Kabinenverglasungsabschnitt, in dem in der Blickrichtung des Maschinenführers ein sichtversperrendes Element liegt, wobei das genannte Kamerabilde eine Darstellung des hinter dem sichtversperrendem Element liegenden Arbeitsbereichs beinhaltet.

25. Kran mit einem Steuerstand, der gemäß einem der Ansprüche 1 bis 24 ausgebildet ist.

## Claims

1. Control stand for controlling a crane, an excavator, a crawler, or a similar construction machine, comprising a seat (710), a plurality of control elements (202) for inputting control elements, at least one display device (402, 502, 602) for displaying information, and a control unit for generating actuation signals depending on input control commands and/or for providing information on the display functions, **characterised in that** a detection device for detecting a head position and/or viewing direction of the machine operator and/or for detecting a load receiving means position and/or load position, and a seat alignment setting device for automatically tilting and/or rotating the seat (2015) depending on the detected head position and/or viewing direction of the machine operator and/or depending on the detected load receiving means position and/or load position are provided.

2. Control stand according to the preceding claim, wherein the seat (2015) is assigned at least one harness and/or retainer (801) for holding the machine operator back on the seat (2015), wherein an automatic tensioning device is provided, for tensioning the harness and/or retainer (801) depending on a tilting of the seat (2015).

3. Control stand according to any of the preceding claims, wherein detection means for automatically detecting a body stature and/or corpulency of a machine operator, and a setting device for automatically setting at least one operating parameter of the seat (2015) depending on the detected body stature and/or corpulency are provided.

4. Control stand according to the preceding claim, wherein the detection means for detecting the body stature and/or corpulency comprise at least one pressure sensor in a seat surface of the seat (2015) and optical detection means for detecting the height of the machine operator, wherein at least one of the following operating parameters of the seat is designed such that it can be set: seat height, spring and/or damping strength, seat inclination, backrest inclination, side cushion contour.

5. Control stand according to any of the preceding claims, wherein the display device (2012) provides a display, which changes position dynamically, of display and/or control elements, wherein a detection device for detecting a head position and/or viewing direction of the machine operator, and/or a detection device for detecting the actual position of a load receiving means and/or a load to be received is provided, wherein the control unit (2004) provides for dynamic shifting of the display and/or control elements on the display surface of the display device (2012) depending on the detected head position and/or viewing direction of the machine operator, and/or depending on the detected load receiving means position and/or load position, such that the display and/or control elements remain in the field of view of the machine operator.

6. Control stand according to any of the preceding claims, wherein a multi-zone air conditioner for regulating the air temperature and/or quality and/or humidity in a manner differing by zones is provided, wherein an air conditioning, control and/or regulating device has setting means for setting individual target values for the different climate zones.

7. Control stand according to the preceding claim, wherein the display device (2012) has a display surface for displaying the climate zones, and the setting means comprise a gesture and/or contact detection sensor system for detecting gestures and/or contact on the display surface, wherein the multi-zone air conditioner is designed such that the size and/or position and/or contour of the climate zones can be set in a variable manner relative to the seat (2015).

8. Control stand according to any of the preceding claims, wherein a communications device for communicating voice and/or text messages is provided and is connected to the display device (2012), comprising a communications display surface for displaying communications information, wherein the communications display surface comprises a representation of the work region and possible communications partners located therein, wherein in particular
- marking means for highlighting a communications partner to whom a communications connection is or will be established, in the communications display surface, and/or
- selection means for selecting a communications partner displayed in the work region representation are provided, and the communications device establishes a communications connection to the selected communications partner depending on a selection made in the work region representation, and/or
- a collision checking device checks a possible collision with a communications partner located in the work region on the basis of a current or planned travel path, and the communications device is designed to automatically establish a communications connection with the communications partner as soon as the collision checking device has determined a possible collision with the mentioned communications partner, wherein the communications device preferably comprises an emergency call button for establishing an emergency call connection, and is designed to transfer supplementary operating data comprising sensor data and/or camera images in the event of an emergency call connection being established, wherein in particular a weather detection device for detecting weather data and/or weather forecast data is provided, and the communications device is designed to automatically establish a weather emergency call connection depending on the detected weather and/or weather forecast data.

9. Control stand according to any of the preceding claims, wherein a counter-noise device for compensating ambient noise and/or reducing noise exposure to which the machine operator on the seat (2015) is subjected is provided, wherein the mentioned counter-noise device comprises at least one noise detection sensor, in particular a microphone, and at least one noise generator for generating counter-noise, wherein a counter-noise control device the noise generator depending on a signal of the at least one noise detection sensor is provided.

10. Control stand according to the preceding claim, wherein the at least one noise generator comprises at least one vibrator which is attached to a cab wall and/or cab glazing and is provided for causing a cab wall and/or cab glazing to vibrate, wherein a plurality of noise detection sensors are provided, of which
- at least one noise detection sensor is provided outside of an operator's cab,
- at least one noise detection sensor is provided inside the operator's cab and/or inside a double cab wall,
and/or a plurality of active noise control generators are provided, of which
- at least one active noise control generator is arranged outside of the operator's cab,
- at least one active noise control generator is arranged inside the operator's cab and/or inside a double cab wall.

11. Control stand according to any of the preceding claims, wherein a windscreen wiper device comprising at least one windscreen wiper (2016) for wiping an operator's cab glazing is provided, wherein a wiping region of the windscreen wiper (2016) can be set in a variable manner depending on at least one operating parameter of the control stand and/or of the machine to be controlled by the control stand.

12. Control stand according to the preceding claim, wherein a detection device for detecting a wiping resistance and/or a wiping obstacle is provided, wherein the wiping region of the windscreen wiper (2016) is limited, depending on the detected wiping resistance and/or the wiping obstacle, to a wiping region in which the detected wiping resistance remains below a predetermined limit value and/or which is outside of the wiping obstacle, wherein a lifting device for lifting the windscreen wiper (2016) from the windscreen glazing to be wiped is provided and can be actuated, depending on a signal of the detection device, in such a way that the windscreen wiper (2016) is lifted over a detected wiping obstacle and/or a wiping region in which the detected wiping resistance exceeds a predetermined limit value.

13. Control stand according to either of the two preceding claims, wherein a detection device for detecting the head position and/or the viewing direction of a machine operator and/or for detecting a load receiving means position and/or load position is provided, wherein the wiping region of the windscreen wiper (2016) can be set automatically, depending on the detected viewing direction and/or head position of the machine operator and/or depending on the detected load receiving means position and/or load position, in such a way that the wiping region of the windscreen wiper (2016) moves with the field of view of the machine operator.

14. Control stand according to any of the three preceding claims, wherein the windscreen wiper (2016) comprises a wiper arm which is variable in length and has an associated length-setting actuator, and/or a wiper drive has a settable movement range.

15. Control stand according to any of the preceding claims, wherein an illumination device for illuminating the control stand comprises a plurality of luminaires for illuminating different illumination zones, which luminaires can be set in a variable manner, independently of one another, with respect to their light colour and/or with respect to their light intensity, in order to generate different light colours and/or light intensities in different illumination zones.

16. Control stand according to the preceding claim, wherein a collision checking device for checking possible collisions, and a light control device for changing the light colour and/or light intensity in an illumination zone facing a possible collision depending on a signal of the collision checking device are provided, and/or at least one brightness sensor for detecting the brightness is provided on the control stand, wherein variable setting of the light colour and/or light intensity takes place depending on a brightness signal of the brightness sensor.

17. Control stand according to any of the preceding claims, wherein an illumination device for illuminating the work region of the machine to be controlled by the control stand is provided, and comprises a plurality of luminaires for illuminating different illumination zones, wherein the luminaires are designed so as to be individually controllable with respect to their light colour and/or light intensity, in order to generate different light colours and/or light intensities in different illumination zones.

18. Control stand according to the preceding claim, wherein the orientation of at least one of the lights is variable, wherein a control device for controlling the orientation of said at least one luminaire depending on a load receiving means position and/or load position in such a way that the illumination region generated by the luminaire automatically migrates together with the load receiving means and/or the load is provided, and/or at least one luminaire is designed so as to be variable with respect to the position and/or size and/or contour of the illumination zone illuminated by it, and can be actuated automatically by means of a control device, depending on a current or planned travel path of the load receiving means, in such a way that the illumination zone generated by the luminaire denotes and/or illuminates the travel path of the load receiving means.

19. Control stand according to any of the preceding claims, wherein a setting device (2010) for setting and storing individual default settings of operating parameters and/or functions of the control elements (2011) and/or the display device (2012) and/or further auxiliary units, and an identification device for identifying respective machine operators on the basis of a detectable identification feature are provided, wherein the control unit (2013) is designed to provide the stored default settings on the basis of an identification feature detected in each case, wherein the default settings which can be set by the setting device (2010) comprise at least one of the following elements:
- a movement resistance and/or a restoring force and/or a restoring torque of a control lever,
- a length of a control lever,
- a position of a graphical control element on a touchscreen element, and
- the position of a display and/or control element on the display device,
- a seat setting and/or a further auxiliary unit setting.

20. Control stand according to any of the preceding claims, wherein at least one control element is designed such that it can be assigned different control functions and/or different characteristics, and the assignment of a particular, selected control function and/or characteristic to the control element can be stored in a personalised manner.

21. Control stand according to any of the preceding claims, wherein the display device (2012) comprises at least one touchscreen display (402, 502) which forms the surface of an armrest (501) of the seat at least in part and/or extends along the armrest approximately at the height of the upper side thereof, wherein the at least one touchscreen display (402) comprises a three-dimensionally contoured display and/or contact surface, extends along a plurality of sides of the armrest, and forms a collar that rises out of the upper side of the armrest.

22. Control stand according to any of the preceding claims, wherein the display device (2012) comprises at least one touchscreen display (304) which is integrated into the surface of a handle portion of a control lever (301), wherein the touchscreen display comprises an in particular three-dimensionally contoured display and/or contact surface which is embedded in the contour of the control lever surface and advantageously steadily extends it.

23. Control stand according to any of the preceding claims, wherein the display device (2012) comprises a display and/or operating surface which forms and/or covers an operator's cab glazing (601) and/or an operator's cab wall cladding, at least in part.

24. Control stand according to the preceding claim, wherein at least part of the display and/or operating surface is formed by a touchscreen display, and/or the display and/or operating surface is assigned a gesture detection device for detecting gestures of the machine operator, and/or the display device (2012) comprises a cross-fading device for loading a camera image in the regions of the display and/or operating surface on a cab glazing portion in which a view-obscuring element is located in the viewing direction of the machine operator, wherein the mentioned camera image includes a representation of the work region located behind the view-obscuring element.

25. Crane comprising a control stand which is designed according to any of claims 1 to 24.

## Revendications

1. Poste de commande permettant de commander une grue, une excavatrice, une chenille ou une machine de construction similaire, avec un siège (701), plusieurs éléments de commande (202) destinés à saisir des éléments de commande d'au moins un dispositif d'affichage (402, 502, 602) destiné à afficher des informations, ainsi qu'avec une unité de commander permettant de générer des signaux de réglage en fonction d'instructions de commande saisies et/ou permettant de fournir des informations aux fonctions d'affichage, **caractérisé en ce que** sont prévus un système de détection permettant de détecter une position de tête et/ou une direction du regard du conducteur de machine et/ou permettant de détecter une position de moyen de réception de charge et/ou de charge ainsi qu'un dispositif de réglage d'orientation de siège permettant de faire basculer et/ou tourner automatiquement le siège (2015) en fonction de la position de tête et/ou de la direction du regard détectée du conducteur de machine et/ou en fonction de la position de moyen de réception de charge et/ou de charge détectée.

2. Poste de commande selon la revendication précédente, dans lequel sont associés au siège (2015) au moins une sangle de maintien et/ou un étrier de maintien (801) pour retenir le conducteur de machine sur le siège (2015), dans lequel un dispositif de serrage automatique est prévu pour serrer la sangle de maintien et/ou l'étrier de maintien (801) en fonction d'un basculement du siège (2015).

3. Poste de commande selon l'une quelconque des revendications précédentes, dans lequel sont prévus des moyens de détection pour détecter automatiquement une stature et/ou une corpulence d'un conducteur de machine et un dispositif de réglage pour régler automatiquement au moins un paramètre de fonctionnement du siège (2015) en fonction de la stature et/ou de la corpulence détectée.

4. Poste de commande selon la revendication précédente, dans lequel les moyens de détection permettant de détecter la stature et/ou la corpulence présentent au moins un capteur de pression dans une surface d'assise du siège (2015) et des moyens de détection optiques pour détecter la taille du conducteur de machine, dans lequel au moins un des paramètres de fonctionnement suivants du siège est réalisé de manière réglable : hauteur du siège, intensité de suspension et/ou d'amortissement, inclinaison du siège, inclinaison du dossier, contour des joues latérales.

5. Poste de commande selon l'une quelconque des revendications précédentes, dans lequel le dispositif d'affichage (2012) prévoit un affichage à variation de position dynamique d'éléments d'affichage et/ou de commande, dans lequel un système de détection est prévu pour détecter une position de tête et/ou une direction du regard du conducteur de machine et/ou un système de détection pour détecter la position réelle d'un moyen de réception de charge et/ou d'une charge à recevoir, dans lequel l'unité de commande (2004) prévoit un déplacement par coulissement dynamique des éléments d'affichage et/ou de commande sur la surface d'affichage du dispositif d'affichage (2012) en fonction de la position de tête et/ou de la direction du regard détectée du conducteur de machine et/ou en fonction de la position de moyen de réception de charge et/ou de charge détectée de telle manière que les éléments d'affichage et/ou de commande restent dans le champ de vision du conducteur de machine.

6. Poste de commande selon l'une quelconque des revendications précédentes, dans lequel une installation de climatisation à zones multiples est prévue pour réguler différemment par zones la température de l'air et/ou la qualité de l'air et/ou l'humidité de l'air, dans lequel un système de climatisation, de commande et/ou de régulation possède des moyens de réglage pour régler des valeurs de consigne individuelles pour les différentes zones à climatiser.

7. Poste de commande selon la revendication précédente, dans lequel le dispositif d'affichage (2012) possède une surface d'affichage pour afficher les zones à climatiser et les moyens de réglage présentent un mécanisme capteur de détection de gestes et/ou d'effleurements pour détecter des gestes et/ou des effleurements sur la surface d'affichage, dans lequel l'installation de climatisation à zones multiples est réalisée de manière à pouvoir être réglée de manière variable quant à la dimension et/ou la position et/ou le contour des zones à climatiser par rapport au siège (2015).

8. Poste de commande selon l'une quelconque des revendications précédentes, dans lequel un dispositif de communication est prévu pour communiquer des messages vocaux et/ou textuels et est rattaché au dispositif d'affichage (2012), qui présente une surface d'affichage de communication destinée à afficher des informations de communication, dans lequel la surface d'affichage de communication présente une représentation de la zone de travail et des éventuels partenaires de communication s'y trouvant, dans lequel en particulier
- des moyens de marquage sont prévus dans la surface d'affichage de communication pour mettre en évidence un partenaire de communication, avec lequel une liaison de communication est établie ou sera établie, et/ou
- des moyens de sélection sont prévus pour sélectionner un partenaire de communication affiché sur la représentation de zone de travail et le dispositif de communication établit une liaison de communication avec le partenaire de communication sélectionné en fonction d'une sélection réalisée sur la représentation de zone de travail, et/ou
- un dispositif de test de collision teste, à l'aide d'un trajet de déplacement instantané ou planifié, une éventuelle collision par rapport à un partenaire de communication se trouvant dans la zone de travail et le dispositif de communication est réalisé pour établir automatiquement une liaison de communication avec le partenaire de communication dès que le dispositif de test de collision détermine une éventuelle collision par rapport au partenaire de communication évoqué, dans lequel le dispositif de communication présente de préférence un bouton d'appel d'urgence destiné à établir une liaison d'appel d'urgence et est réalisé pour transmettre des données de capteur et/ou des images de caméra comprenant des données de fonctionnement de complément lors de l'établissement d'une liaison d'appel d'urgence, dans lequel en particulier un dispositif de détection de météo est prévu pour détecter des données météorologiques et/ou des données de prévisions météorologiques et le dispositif de communication est réalisé pour établir automatiquement une liaison d'appel d'urgence météo en fonction des données météorologiques et/ou de prévisions météorologiques détectées.

9. Poste de commande selon l'une quelconque des revendications précédentes, dans lequel un dispositif de bruit antagoniste est prévu pour compenser le bruit environnant et/ou pour réduire des nuisances sonores agissant sur le conducteur de machine sur le siège (2015), dans lequel ledit dispositif de bruit antagoniste comprend au moins un capteur de détection de bruit, en particulier un microphone, et au moins un générateur de bruit pour générer du bruit antagoniste, dans lequel un dispositif de commande de bruit antagoniste commande le générateur de bruit en fonction d'un signal de l'au moins un capteur de détection de bruit.

10. Poste de commande selon la revendication précédente, dans lequel l'au moins un générateur de bruit comprend au moins un vibrateur, qui est installé sur une paroi de cabine et/ou sur un vitrage de cabine et est prévu pour amener en vibrations une paroi de cabine et/ou un vitrage de cabine, dans lequel plusieurs capteurs de détection de bruit,
- dont au moins un capteur de détection de bruit est prévu à l'extérieur d'une cabine de conducteur,
- dont au moins un capteur de détection de bruit est prévu à l'intérieur de la cabine de conducteur et/ou est prévu à l'intérieur d'une double paroi de cabine,
et/ou plusieurs générateurs de bruit antagoniste sont prévus, dont
- au moins un générateur de bruit antagoniste est disposé à l'extérieur de la cabine de conducteur,
- au moins un générateur de bruit antagoniste est disposé à l'intérieur de la cabine de conducteur et/ou à l'intérieur d'une double paroi de cabine.

11. Poste de commande selon l'une quelconque des revendications précédentes, dans lequel un dispositif d'essuie-glace est prévu avec au moins un essuie-glace (2016) pour essuyer le vitrage de cabine de conducteur, dans lequel une zone d'essuyage de l'essuie-glace (2016) peut être réglée de manière variable en fonction d'au moins un paramètre de fonctionnement du poste de commande et/ou de la machine devant être commandée par le poste de commande.

12. Poste de commande selon la revendication précédente, dans lequel un système de détection est prévu pour détecter une résistance à l'essuyage et/ou un obstacle d'essuyage, dans lequel la zone d'essuyage de l'essuie-glace (2016) se limite à une zone d'essuyage en fonction de la résistance à l'essuyage détectée et/ou de l'obstacle d'essuyage, dans laquelle la résistance à l'essuyage détectée reste sous une valeur limite prédéfinie et/ou qui se trouve à l'extérieur de l'obstacle d'essuyage, dans lequel un dispositif de levage est prévu pour lever l'essuie-glace (2016) du vitrage à essuyer et peut être piloté en fonction d'un signal du dispositif de détection de telle manière que l'essuie-glace (2016) est relevé au-dessus d'un obstacle d'essuyage détecté et/ou d'une zone d'essuyage, dans laquelle la résistance d'essuyage détectée dépasse une valeur limite prédéfinie.

13. Poste de commande selon l'une quelconque des deux revendications précédentes, dans lequel un système de détection est prévu pour détecter la position de tête et/ou la direction du regard d'un conducteur de machine et/ou pour détecter une position de moyen de réception de charge et/ou de charge, dans lequel la zone d'essuyage de l'essuie-glace (2016) peut être réglée automatiquement en fonction de la direction du regard détectée et/ou de la position de tête du conducteur de machine et/ou en fonction de la position de moyen de réception de charge et/ou de charge détectée de telle manière que la zone d'essuyage de l'essuie-glace (2016) se déplace avec le champ de vision du conducteur de machine.

14. Poste de commande selon l'une quelconque des trois revendications précédentes, dans lequel l'essuie-glace (2016) présente un bras d'essuie-glace à longueur modifiable avec un actionneur de réglage de longueur associé et/ou un entraînement d'essuie-glace présente une zone de déplacement pouvant être réglée.

15. Poste de commande selon l'une quelconque des revendications précédentes, dans lequel un dispositif d'éclairage permettant d'éclairer le poste de commande comprend plusieurs moyens lumineux pour éclairer différentes zones d'éclairage, qui peuvent être réglées de manière variable indépendamment les unes des autres quant à leur couleur de lumière et/ou quant à leur intensité lumineuse pour générer dans différentes zones d'éclairage différentes couleurs de lumière et/ou intensités lumineuses.

16. Poste de commande selon la revendication précédente, dans lequel sont prévus un dispositif de test de collision pour tester d'éventuelles collisions et un dispositif de commande de lumière pour modifier la couleur de lumière et/ou l'intensité lumineuse dans une zone d'éclairage, tournée vers une éventuelle collision, en fonction d'un signal du dispositif de test de collision, et/ou au moins un capteur de clarté est prévu pour détecter la clarté sur le poste de commande, dans lequel un réglage variable de la couleur de lumière et/ou de l'intensité lumineuse est effectué en fonction d'un signal de clarté du capteur de clarté.

17. Poste de commande selon l'une quelconque des revendications précédentes, dans lequel un dispositif d'éclairage est prévu pour éclairer la zone de travail de la machine à commander par le poste de commande et plusieurs moyens lumineux pour éclairer différentes zones d'éclairage, dans lequel les moyens lumineux sont réalisés de manière à pouvoir être commandés individuellement quant à leur couleur de lumière et/ou intensité lumineuse pour générer dans différentes zones d'éclairage différentes couleurs de lumière et/ou intensités lumineuses.

18. Poste de commande selon la revendication précédente, dans lequel au moins un des moyens lumineux peut être modifié quant à son orientation, dans lequel un dispositif de commande est prévu pour commander l'orientation dudit au moins un moyen lumineux en fonction d'une position de moyen de réception de charge et/ou de charge de telle manière que la zone d'éclairage générée par le moyen lumineux se déplace automatiquement avec le moyen de réception de charge et/ou la charge, et/ou au moins un moyen lumineux est réalisé de manière variable quant à la position et/ou la taille et/ou le contour de la zone d'éclairage qu'il éclaire et peut être piloté automatiquement par un dispositif de commande en fonction d'un trajet de déplacement instantané ou planifié du moyen de réception de charge de telle manière que la zone d'éclairage générée par le moyen lumineux caractérise et/ou illumine le trajet de déplacement du moyen de réception de charge.

19. Poste de commande selon l'une quelconque des revendications précédentes, dans lequel sont prévus un dispositif de réglage (2010) pour régler et mémoriser des préréglages individuels de paramètres et/ou de fonctions de fonctionnement des éléments de commande (2011) et/ou du dispositif d'affichage (2012) et/ou d'autres groupes auxiliaires et un système d'identification pour identifier un conducteur de machine concerné à l'aide d'une caractéristique d'identification détectable, dans lequel l'unité de commande (2013) est réalisée pour prévoir les préréglages mémorisés à l'aide d'une caractéristique d'identification respectivement détectée, dans lequel les préréglages pouvant être réglés par le dispositif de réglage (2010) comprennent au moins un des éléments suivants :
- une résistance au déplacement et/ou une force de rappel et/ou un couple de rappel d'un levier de commande,
- une longueur d'un levier de commande,
- une position d'un élément de commande graphique sur un élément d'écran tactile, et
- la position d'un élément d'affichage et/ou de commande sur le dispositif d'affichage,
- un réglage de siège et/ou un autre réglage de groupe auxiliaire.

20. Poste de commande selon l'une quelconque des revendications précédentes, dans lequel au moins un élément de commande est réalisé de manière à pouvoir être occupé avec différentes fonctions de commande et/ou avec différentes courbes caractéristiques et l'occupation de l'élément de commande peut être sauvegardée de manière personnalisée avec une fonction de commande et/ou une courbe caractéristique définie sélectionnée.

21. Poste de commande selon l'une quelconque des revendications précédentes, dans lequel le dispositif d'affichage (2012) présente au moins un écran tactile (402, 502), qui forme au moins en partie la surface d'un accoudoir (501) du siège et/ou s'étend le long de l'accoudoir à peu près à hauteur de son côté supérieur, dans lequel l'au moins un écran tactile (402) présente une surface d'affichage et/ou d'effleurement à contourage tridimensionnel, s'étend le long de plusieurs côtés de l'accoudoir et forme un rebord ascendant depuis le côté supérieur de l'accoudoir.

22. Poste de commande selon l'une quelconque des revendications précédentes, dans lequel le dispositif d'affichage (2012) présente au moins un écran tactile (304), qui est intégré dans la surface d'une section de préhension d'un levier de commande (301), dans lequel l'écran tactile présente une surface d'affichage et/ou d'effleurement en particulier à contourage tridimensionnel, qui est intégrée dans le contour de la surface de levier de commande et poursuit celle-ci avantageusement en permanence.

23. Poste de commande selon l'une quelconque des revendications précédentes, dans lequel le dispositif d'affichage (2012) présente une surface d'affichage et/ou une surface d'utilisation, qui forme et/ou recouvre au moins en partie un vitrage de cabine de conducteur (601) et/ou un habillage de paroi de cabine de conducteur.

24. Poste de commande selon la revendication précédente, dans lequel au moins une partie de la surface d'affichage et/ou d'utilisation est formée par un écran tactile et/ou un système de détection de gestes permettant de détecter des gestes du conducteur de machine est associé à la surface d'affichage et/ou d'utilisation, et/ou le dispositif d'affichage (2012) présente un système de fondu pour insérer une image de caméra dans les zones de la surface d'affichage et/ou d'utilisation sur une section de vitrage de cabine, dans laquelle un élément d'obstruction de vue se situe dans la direction du regard du conducteur de machine, dans lequel ladite image de caméra renferme une représentation de la zone de travail située derrière l'élément d'obstruction de vue.

25. Grue avec un poste de commande, qui est réalisé selon l'une quelconque des revendications 1 à 24.
